# EUROPEAN PATENT APPLICATION

(11) **EP 4 787 307 A1**
(43) Date of publication of application: **05.08.2026**
(21) Application number: 25217214.3
(22) Date of filing: 20.11.2025
(51) Int. Cl.: G06T 7/292, G06T 3/14

(54) **SYSTEMS AND METHODS FOR IMAGE REGISTRATION TO FACILITATE SENSOR FUSION**

(30) Priority: 30.01.2025 US 202563751699 P; 22.04.2025 US 202519186409
(71) Applicant: Palantir Technologies Inc., Aventura, Florida 33180 (US)
(72) Inventor: CAMERON, Mary, Snowmass Village (US); SHEN, Tong, Redmond (US); WANG, Di, Sammamish (US); WU, Yue, Lynnwood (US); KIM, Keun Jae, Kirkland (US); LEI, Peng, Bellevue (US); VAN ANDEL, Ethan, Berkeley (US); DRISCOLL, Joseph Adam, Jamaica Plain (US); RAMSEY, Stephen, Mountain View (US); LYMPEROPOULOS, Dimitrios, Kirkland (US)
(74) Representative: Sayer, Robert David

(57) **Abstract**

In some examples, systems and methods for multiple-sensor object tracking are provided. For example, a method includes: receiving one or more first image transformations generated based on a plurality of previous images from a plurality of sensor feeds respectively; receiving a plurality of images from the plurality of sensor feeds; generating a transformation update based on the one or more image transformations and the plurality of images using an image registration model; generating a second image transformation based on the transformation update and the one or more first image transformations; applying the second image transformation to the plurality of images to generate a set of transformed images; and identifying a plurality of objects using a multiple object tracking model based on the set of transformed images.

## Description

This application claims priority U.S. Provisional Application No. 63/751,699, filed January 30, 2025.

### FIELD

Certain embodiments of the present disclosure relate to object tracking. More particularly, some embodiments of the present disclosure relate to image registration for multiple-sensor object tracking.

### BACKGROUND

There are two major computer vision based object tracking models: multiple object tracking (MOT) and single object tracking (SOT). Often, MOT models require training a detector with predefined classes and the tracking detected objects of predefined classes across frames of a video. Comparatively, often SOT models do not require a separately trained object detector, but instead can be designed to track any generic object by specifying the target of interest.

Conventional systems and methods for object tracking may use one or more sensors, such as narrow band cameras, wide band cameras, infrared (IR) cameras, electro-optic (EO) cameras, and/or the like. In some examples, conventional systems and methods typically use object detection techniques that are computationally costly, inefficient (e.g., in terms of time and/or resources), and that make it difficult to track an object across different sensor feeds.

Hence, it is desirable to improve techniques for object tracking.

### SUMMARY

Certain embodiments of the present disclosure relate to object tracking. More particularly, some embodiments of the present disclosure relate to multiple sensor object tracking.

At least some aspects of the present disclosure are directed to a method for multiple-sensor object tracking. In some embodiments, the method includes: receiving one or more first image transformations generated based on a plurality of previous images from a plurality of sensor feeds respectively; receiving a plurality of images from the plurality of sensor feeds; generating a transformation update based on the one or more image transformations and the plurality of images using an image registration model; generating a second image transformation based on the transformation update and the one or more first image transformations; applying the second image transformation to the plurality of images to generate a set of transformed images; and identifying a plurality of objects using a multiple object tracking model based on the set of transformed images. In some embodiments, the method is performed using one or more processors.

At least some aspects of the present disclosure are directed to a system for multiple-sensor object tracking. In some embodiments, the system includes one or more processors; and one or more memories storing instructions that, when executed by the one or more processors, cause the system to perform a set of operations. In some embodiments, the set of operations include: receiving one or more first image transformations generated based on a plurality of previous images from a plurality of sensor feeds respectively; receiving a plurality of images from the plurality of sensor feeds; generating a transformation update based on the one or more image transformations and the plurality of images using an image registration model; generating a second image transformation based on the transformation update and the one or more first image transformations; applying the second image transformation to the plurality of images to generate a set of transformed images; and identifying a plurality of objects using a multiple object tracking model based on the set of transformed images.

At least some aspects of the present disclosure are directed to a non-transitory computer readable storage medium comprising instructions for multiple-sensor object tracking that, when executed by one or more processors, cause the one or more processors to perform operations comprising: receiving one or more first image transformations generated based on a plurality of previous images from a plurality of sensor feeds respectively; receiving a plurality of images from the plurality of sensor feeds; generating a transformation update based on the one or more image transformations and the plurality of images using an image registration model; generating a second image transformation based on the transformation update and the one or more first image transformations; applying the second image transformation to the plurality of images to generate a set of transformed images; and identifying a plurality of objects using a multiple object tracking model based on the set of transformed images.

Depending upon embodiment, one or more benefits may be achieved. These benefits and various additional objects, features and advantages of the present disclosure can be fully appreciated with reference to the detailed description and accompanying drawings that follow.

### BRIEF DESCRIPTION OF THE DRAWINGS

FIG. 1 is an illustrative example of an object tracking system or workflow, according to certain embodiments of the present disclosure.
FIG. 2 is an illustrative example of a method for object tracking, according to certain embodiments of the present disclosure.
FIG. 3 is a simplified diagram showing a method for object tracking according to certain embodiments of the present disclosure.
FIG. 4 is an illustrative example of a multiple sensor object tracking according to certain embodiments of the present disclosure.
FIG. 5 is a simplified diagram showing a method for image registrations according to certain embodiments of the present disclosure.
FIG. 6 illustrates a simplified diagram showing a computing system for object tracking, according to certain embodiments of the present disclosure.

### DETAILED DESCRIPTION

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The use of numerical ranges by endpoints includes all numbers within that range (e.g., 1 to 5 includes 1, 1.5, 2, 2.75, 3, 3.80, 4, and 5) and any number within that range.

Although illustrative methods may be represented by one or more drawings (e.g., flow diagrams, communication flows, etc.), the drawings should not be interpreted as implying any requirement of, or particular order among or between, various steps disclosed herein. However, some embodiments may require certain steps and/or certain orders between certain steps, as may be explicitly described herein and/or as may be understood from the nature of the steps themselves (e.g., the performance of some steps may depend on the outcome of a previous step). Additionally, a "set," "subset," or "group" of items (e.g., inputs, algorithms, data values, etc.) may include one or more items and, similarly, a subset or subgroup of items may include one or more items. A "plurality" means more than one.

As used herein, the term "based on" is not meant to be restrictive, but rather indicates that a determination, identification, prediction, calculation, and/or the like, is performed by using, at least, the term following "based on" as an input. For example, predicting an outcome based on a particular piece of information may additionally, or alternatively, base the same determination on another piece of information. As used herein, the term "receive" or "receiving" means obtaining from a data repository (e.g., database), from another system or service, from another software, or from another software component in a same software. In certain embodiments, the term "access" or "accessing" means retrieving data or information, and/or generating data or information.

Conventional systems and methods are often not capable of efficiently identifying objects across different sensor feeds (e.g., video feeds). Conventional systems and methods typically use object detection techniques, which leads to increased cost and decreased efficiency, and is more difficult to track an object across different sensor feeds. For example, such conventional systems are often not capable of efficiently identifying objects across different sensor feeds (e.g., across different video feeds, of different sensors, etc.). In some examples, conventional systems using conventional image matching algorithms often cannot accurately identify objects across different sensor feeds.

Various embodiments of the present disclosure can achieve benefits and/or improvements by a computing system receiving data from multiple sensors and using computing models to process the sensor data and identify and track one or more objects. In some embodiments, benefits include significant improvements, including, for example, increased efficiency, reduced complexity, and improved accuracy, in tracking multiple objects across multiple sensor feeds. In certain embodiments, benefits include increased object tracking accuracy by fusing different sensor feeds, for example, sensor feeds that complement each other. In some embodiments, systems and methods are configured to convert different video feeds to a same pixel space and use temporal context and spatial context. In certain embodiments, systems and methods are configured to use image registrations across multiple pairs of image frames in two or more sensor feeds to improve image registration accuracy and efficiency, which can also improve the performance of object tracking.

According to some embodiments, tracking the movement of multiple objects in a single video feed remains a challenge under normal circumstances. The challenges include, for example, objects may appear blurry or distorted in sensors with different optical properties or under different conditions; moving objects may disappear behind buildings or look too similar to other nearby objects to establish uniqueness; sensor feeds may pan, zoom, or otherwise change views and lose a tracked object; sensors may fail to retrieve recordings at regular time intervals or with precise timestamps; and/or the like.

In certain embodiments, one way to mitigate an individual tracker (e.g., of an individual sensor feed, etc.) failing is to simultaneously run two or more sensor feeds (e.g., two or more multiple-object trackers, etc.) on the same scene, and combine the two or more sensor feeds (e.g., fuse the two or more sensor feeds, etc.) and/or de-duplicate the objects using a sensor fusion algorithm. In some examples, sensor feeds include two video streams, two image sequences that are ordered in time, and/or one video and one image sequence. In certain examples, feeds may have different fields of view, zoom levels, image resolutions, color modalities (e.g., electro-optical, infrared, radar, etc.), lens distortions, time stamps, and/or the like. If successful, in some examples, the two sets of independent tracking IDs (e.g., of two sensor feeds) that are fed into the object tracker (e.g., the MOT, the sensor fusion algorithm, etc.) are de-duplicated and given a unique tracking ID, effectively yielding a single multi-object tracker with greater coverage of the scene.

According to some embodiments, an important feature of a sensor fusion algorithm (e.g., a sensor fusion process) includes an image registration. In certain embodiments, image registration is the process of aligning two or more images of the same scene taken at different times, from different viewpoints, or by different sensors. When these images depict a planar surface, in some embodiments, homography is used to achieve the alignment of two or more images. In some embodiments, a homography is a projective transformation between two planes, or alternatively, a mapping between two planar projections. In certain embodiments, homography is a mathematical transformation that maps points from one image to corresponding points in another, preserving the geometric relationships. By computing the homography between the images, in some embodiments, the system can warp one image to align perfectly with the other, ensuring that corresponding features match up accurately.

According to certain embodiments, image registration is important in sensor fusion, where precise alignment of images is necessary for determining the amount of overlap between any two detected objects. If two objects consistently overlap in the two feeds despite the differences between the sensors, in some embodiments, it is likely that the two overlapping objects are referring to the same object.

According to some embodiments, image registration and/or image matching techniques such as, homography transformation, A WOGs (Angle-Weighted Oriented Gradients), or CFOG (Channel Features of Orientated Gradients), and/or the like can be applied across different video feeds, allowing an object tracking system to map the different video feeds to the same pixel space. In certain embodiments, image matching results, however, may still fail if there are temporal misalignments. In some embodiments, to address this, the object tracking system can leverage traditional multiple object tracking (MOT) techniques. In certain embodiments, the object tracking system can use one or more object trackers to match non-overlapping detections over time in a video feed (e.g., moving cars or people). In the case of sensor fusion, in some embodiments, the object tracking system can treat the detections from the different video feeds as they come from a single video feed over time, and pass them through a multiple object tracker (MOT) to properly match the sequence of images in a single and/or multiple video feeds. In some embodiments, when the image matching error characteristics do not drastically change over time, leveraging the motion model from MOT can reliably generate a single set of tracks across multiple video feeds.

At least some embodiments of the present disclosure are directed to multiple sensor object tracking. According to certain embodiments (e.g., certain overhead imagery/video application scenarios), there are multiple types of sensors looking at the same location at the same time. For example, the types of sensors can include narrow band cameras, wide band cameras, infrared (IR) cameras, electro-optic (EO) cameras, and/or the like. In some embodiments, one or more sensors (e.g., each sensor) feed to an object detector and tracker to generate detection tracks. In certain embodiments, given detector and tracker accuracy may not be accurate, and different sensors may complement each other, it can be beneficial to be able to fuse the output of object trackers running independently on these different sensor feeds (e.g., video feeds) to generate a single set of detection tracks. In some embodiments, systems and methods may include fusing detection tracks between narrow and wide camera feeds as well as between EO and IR feeds.

According to some embodiments, the challenge of sensor fusion lies in the fact that sensor feeds can differ in so many ways, that algorithms must be configured in advance and/or learn to adapt to the differences to maintain accuracy, and it must do it quickly enough to remain relevant to the situation, often demanding results in real time. Without the ability to adapt to errors or correct them over time, in certain embodiments, even robust MOT methods are bound to eventually fail to de-duplicate objects (false negatives) or to incorrectly match objects that are not the same (false positives.)

In some embodiments, image registration is the process of mathematically aligning two images that capture overlapping scenes by transforming one or both images into a single image space, allowing one to create a unified view of a single scene. In sensor fusion, in certain embodiments, registering images from two sensor feeds allows an object tracking system to identify any overlapping objects present in both images. In some embodiments, as these are scenes with moving cameras and objects, image registration techniques that adapt to the temporal changes in perspective, camera motion, zoom level, color space, and other sensor and image parameters of the two sensor feeds are important in determining object similarity (e.g., track similarity), as well as adapting to errors introduced by unsynchronized time stamps.

According to certain embodiments, the object tracking system can use improved image registration techniques, which are useful in sensor fusion, including (1) using information from fused tracks to better solve for image registration, and/or (2) storing information in a way that makes it more robust to address individual failures. In some embodiments, these registration enhancements allow the sensor fusion algorithm to continue running even with registration failures, and make subsequent registration successes much more likely.

According to some embodiments, systems and methods may first geo-register different video feeds independently. In certain embodiments, systems and methods may map detections from each video feed to the same geo-coordinate space. In some embodiments, with sufficiently accurate georegistration (e.g., image registration with geolocation information, etc.), the detections across two or more sensor feeds (e.g., camera feeds) that overlap can be instantly matched resulting in a single set of tracked objects (e.g., tracks). In certain examples, this approach would not work well because georegistration can often fail, especially in the case of narrow video feeds. In such examples, detections from the individual video feeds will not properly align resulting in poor performance.

According to certain embodiments, fusion at the object and/or track level, where an identified object is associated with a track identifier (ID), also faces one or more challenges, such as, 1) different sensor modality: objects in EO and IR sensors have very different appearances; 2) different sensor bands: wide vs narrow causes different object size/scale; 3) different rotation angle: objects have different orientations; 4) different view angle: different degree of geometric distortions; 5) temporal out-of-synchronization: different object motion and trajectory; and/or 6) object detection/tracking results may not be accurate (false positives, false negatives, ID switches). In some embodiments, these challenges may cause some object/track level fusion approaches (e.g., using its appearance or motion/trajectory, etc. to match) to not work well.

According to some embodiments, systems and methods can convert a first set of image frames in a first video and a second set of image frames in a second video to a same pixel space. In certain embodiments, systems and methods can convert a first set of image frames in a first video and a second set of image frames in a second video to a same pixel space via image matching and/or image registration. In some embodiments, systems and methods can generate a sequence of image frames by combining the first set of image frames and the second set of image frames to generate an aggregated set of image frames. In certain embodiments, systems and methods can generate a sequence of image frames by combining the first set of image frames and the second set of image frames to generate an aggregated set of image frames, where two respective image frames, in the two sets of image frames respectively, that, taken at the same time or close in time, are arranged as adjacent image frames in the aggregated set of image frames. In some embodiments, systems and methods can feed the aggregated set of image frames to an object tracker to track one or more objects across the two videos.

According to certain embodiments, an object tracking system performs image registration and/or image matching across different sensor feeds (e.g., visual data, videos) captured by the different sensors to map detections to the same pixel space. In some embodiments, the system treats the detections of the image-registered sensor feeds as though they are consecutive frames captured by a single (virtual) sensor. In certain embodiments, the system can use an object tracker to align (e.g., register) the detections (e.g., tracking objects) across sensor feeds of two or more sensors and output a single set of tracks (e.g., an identified object with a same tracking ID across different sensor feeds). In some embodiments, an image frame, also referred to as a frame, is an image in a sequence of images or an image in a video. In certain embodiments, a sensor feed, also referred to as a video feed, is a video stream or a sequence of images captured over time by a sensor.

According to some embodiments, instead of performing georegistration on the individual video feeds, the object tracking systems and methods apply image registration techniques across different video feeds. In certain embodiments, image registration allows the object tracking system to map the different video feeds to the same pixel space. In some embodiments, the system maps different video feeds to the same pixel space as opposed to the same geolocation when geo-registration is used. In certain embodiments, image registration is a simpler problem (in the computational sense) compared to georegistration and allows for more reliable/persistent results.

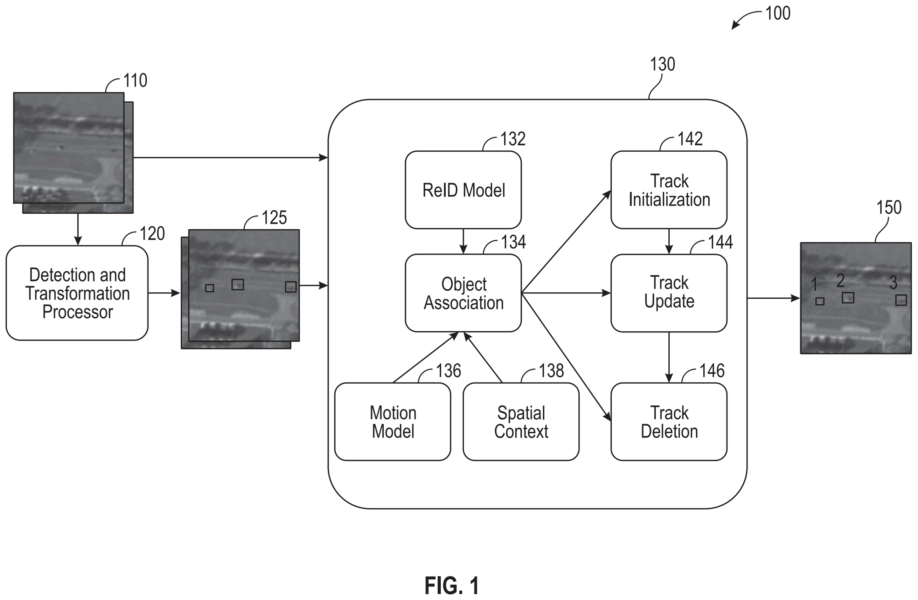

FIG. 1 is an illustrative example of an object tracking system or workflow 100, according to certain embodiments of the present disclosure. FIG. 1 is merely an example. One of ordinary skill in the art would recognize many variations, alternatives, and modifications. According to some embodiments, the object tracking system includes one or more video feeds 110, one or more detection and transformation processors 120, and a multiple object tracker 130 (e.g., a MOT, a multiple object tracking model, a MOT tracker, a MOT module, a MOT system). In certain embodiments, the one or more detection and transformation processor 120 can generate an aggregated video feed 125. In some embodiments, the MOT 130 includes a re-identification model 132, an object association model 134, a motion model 136, spatial context 138, track initialization process 142, track update process 144, and track deletion process 146. In certain embodiments, the MOT 130 can generate a tracking result 150. In some embodiments, the tracking result 150 includes one or more tracked objects. In certain embodiments, the MOT 130 determines a confidence score associated with each tracked object of one or more tracked objects. In certain embodiments, various components of the object tracking system can improve fusion accuracy among various sensor feeds, for example, in the case of unreliable detection/tracking results of each individual video feed or significant image registration error changes.

According to certain embodiments, the systems and methods of object tracking use a computing model (e.g., a machine-learning model). In certain embodiments, a model, also referred to as a computing model, includes a model to process data. A model includes, for example, an artificial intelligence (AI) model, a machine-learning (ML) model, a deep-learning (DL) model, an artificial neural network (ANN), a deep neural network (DNN), an image processing model, an algorithm, a rule, other computing models, and/or a combination thereof.

Although the above has been shown using a selected group of components in the object tracking system or workflow 100, there can be many alternatives, modifications, and variations. For example, some of the components may be expanded and/or combined. Other components may be inserted into those noted above. Depending upon the embodiment, the arrangement of components may be interchanged with others replaced. Further details of these components are found throughout the present disclosure.

According to certain embodiments, the video feeds 110 are from two or more image sensors. In some embodiments, the video feeds 110 are from two or more types of image sensors. In certain embodiments, each video feed 110 includes a set of images (e.g., image frames). In some embodiments, the video feeds 110 include a first video (e.g., a video stream) and a second video, which are corresponding to a set of first images and a set of second images. In certain embodiments, the first video feed and the second video feed are captured by different image sensors. In some embodiments, the first video feed and the second video feed are captured by different types of image sensors (e.g., narrow band image sensor, wide band image sensor, EO image sensor, IR image sensor, satellite image sensor, etc.).

According to some embodiments, the detection and transformation processor 120 identifies a set of detected objects in the video feeds 110. In certain embodiments, the detection and transformation processor 120 identifies a set of first detected objects in the first video and/or one or more first images in the set of first images. In some embodiments, the detection and transformation processor 120 identifies a set of second detected objects in the second video and/or one or more second images in the set of second images.

According to certain embodiments, the detection and transformation processor 120 applies one or more image registration techniques and/or one or more image-matching techniques (e.g., homography transform, AWOGs, CFOG, etc.) to the first video and the second video. In some embodiments, the detection and transformation processor 120 applies an image registration between a first image in a first video (e.g., a video feed) and a second image in a second video. In certain embodiments, an image registration includes a feature-based registration and/or template-based registration. In some embodiments, the detection and transformation processor 120 applies one or more image registration and/or image-matching techniques to one or more first images in the set of first images and one or more second images in the set of second images. In certain embodiments, the detection and transformation processor 120 generates an image transformation using the one or more image registration and/or image-matching techniques. In some embodiments, the detection and transformation processor 120 generates an image transformation between the first video and the second video using the one or more image registration techniques and/or the one or more image-matching techniques, for example, in a same pixel space. In some embodiments, the detection and transformation processor 120 generates an image transformation between the first video and the second video using an image registration model (e.g., one or more image registration models, one or more image-matching models, homography transform, AWOGs, CFOG, etc.). In certain embodiments, the detection and transformation processor 120 generates an image registration score associated with the image transformation using the image registration model (e.g., an image registration model including homography transform, AWOGs, CFOG, etc.). In some embodiments, an image registration score refers to a value or symbol indicating how well images are registered and/or images are matched.

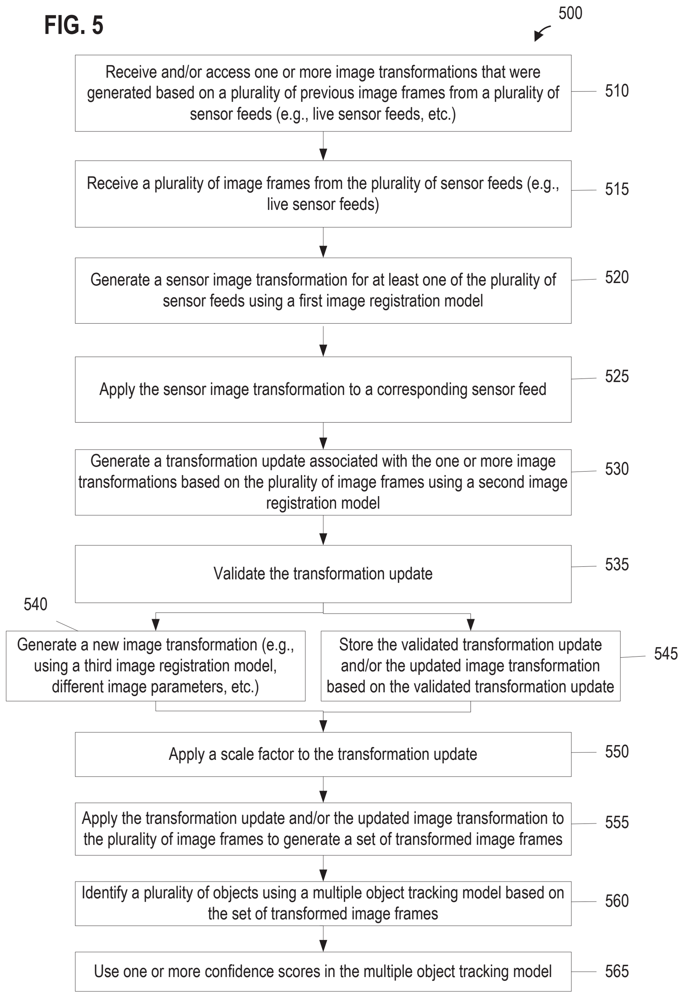

According to some embodiments, the detection and transformation processor 120 determines one or more transformation updates based on a plurality of subsequent image frames after an image transformation (e.g., an initial image transformation, an image transformation with high confidence) is generated, instead of generating a new image transformation. In certain embodiments, the detection and transformation processor 120 can generate a subsequent image transformation based on one or more image transformations and the one or more transformation updates. In some examples, the one or more transformation updates are scaled based on corresponding image registration scores and/or collection times (e.g., earlier time, most recent time) of the image frames. Some embodiments of image transformations and transformation updates are described corresponding to FIG. 5.

According to some embodiments, the detection and transformation processor 120 applies the image transformation (e.g., image registration/matching techniques) to the set of first images to generate a set of transformed (e.g., mapped) first images. In certain embodiments, the detection and transformation processor 120 applies the image transformation to the set of second images to generate a set of transformed second images. In some embodiments, the image transformation is applied to the first set of images or the set of second images. In certain embodiments, the image transformation is applied to only one of the first set of images and the set of second images.

According to certain embodiments, the detection and transformation processor 120 aggregates the set of first images (e.g., the set of transformed first images) with the set of second images (e.g., the set of transformed second images) to generate a set of aggregated images 125. In some embodiments, the detection and transformation processor 120 aggregates the set of first images (e.g., the set of transformed first images) with the set of second images (e.g., the set of transformed second images) to generate the set of aggregated images 125 based on temporal context. In certain embodiments, the detection and transformation processor 120 arranges a first image in the set of first images captured at a first time and a second image in the set of second images captured at approximately the first time adjacent to each other in the set of aggregated images.

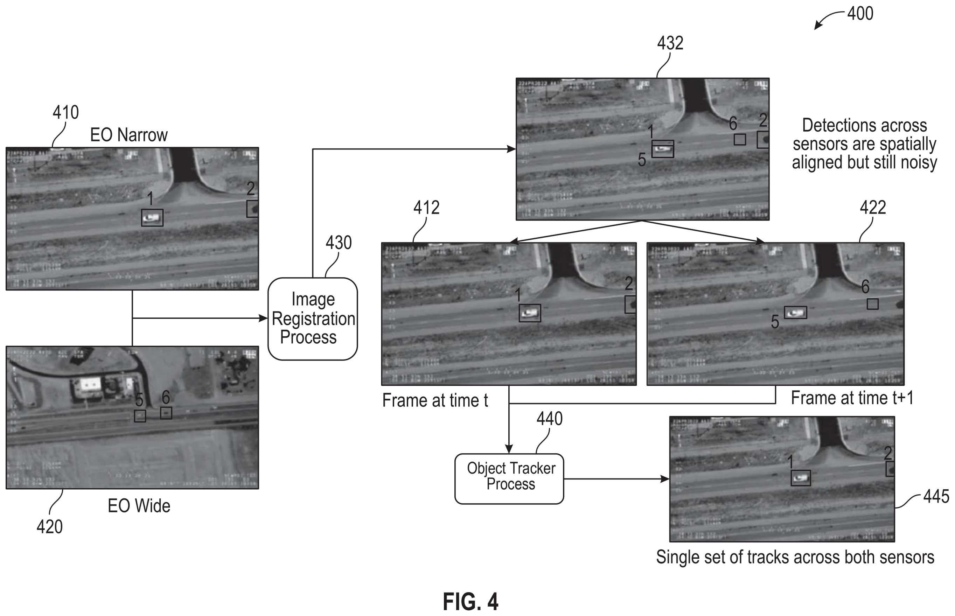

FIG. 4 is an example of two video feeds (e.g., sensor feeds) 410 and 420. As an example, the image frame 412 from the video feed 410 and the image frame 422 from the video feed 420 are captured by two different sensors or two different types of sensors at approximately the same time. In some examples, the image matching algorithm image registration process 430 indicates the detections across the video feeds 410 and 420 are noisy (e.g., tracking ID 2 does not match tracking ID 6). In certain examples, the image frame 422 is transformed (e.g., mapped), for example, based on image matching results. For example, the transformed image frame 422 is arranged as a subsequent image frame of the image frame 412 in the set of aggregated images.

According to some embodiments, referring back to FIG. 1, the set of first detected objects are associated with or assigned to a set of first tracking IDs and the set of first detected objects are associated with or assigned to a set of second tracking IDs different from the set of first tracking IDs. In certain embodiments, the multiple object tracker 130 can match non-overlapping detections over time in a video feed (e.g., can match moving cars or people). In some embodiments, the multiple object tracker 130 (e.g., MOT tracker) can match the set of first detected objects and the set of second detected objects by processing the set of aggregated images 125. In some embodiments, the multiple object tracker 130 can match the set of first detected objects and the set of second detected objects by processing the set of aggregated images 125, using the object association model 134. In some embodiments, the non-overlapping detections across video feeds, that might be the result of the error in the image matching step, are very similar to the non-overlapping detections of moving objects (such as vehicles, people, animals and/or other objects), in a single video feed over time. In certain embodiments, assuming the image matching error characteristics do not drastically change over time, the multiple object tracker 130 may leverage a motion model 136, for example, to reliably generate a single set of tracks across all video feeds.

According to certain embodiments, the MOT tracker 130 can be leveraged to match non-overlapping detections over time in a video feed. In some embodiments, the MOT tracker 130 includes a motion model 136. In certain embodiments, the motion model 136 includes a linear motion model. In some embodiments, the motion model 136 includes a filter that estimates the state of a linear dynamic system from a series of noisy measurements. For example, in some embodiments, the motion model 136 includes a Kalman filter.

According to some embodiments, the MOT tracker 130 includes a re-identification (ReID) model 132. In certain embodiments, the re-identification model 132 includes an appearance model (e.g., a similarity machine-learning model, a regression similarity learning model, a classification similarity learning model, a ranking similarity learning model, and/or etc.). In some embodiments, the re-identification model 132 includes a deep neural network-based model to capture appearance similarity. In some examples, the re-identification model 132 includes a Siamese neural network and/or the like. In certain embodiments, the re-identification model 132 determines one or more similarity metrics between the set of first detected objects and the set of second detected objects. In some embodiments, the re-identification model 132 determines one or more similarity distances between the set of first detected objects and the set of second detected objects. In the example illustrated in FIG. 4, the set of first detected objects identified from the first sensor feed 410 include tracking ID 1 and tracking ID 2, and the set of second detected objects identified from the second sensor feed 420 include tracking ID 5 and ID 6. In this example, the re-identification model may determine tracking ID 1 is similar to tracking ID 5 and tracking ID 2 is similar to tracking ID 6.

According to certain embodiments, the re-identification model 132, the object association model 134, and/or the MOT tracker 130 can match and/or associate objects based on motion and/or appearance. In some embodiments, the re-identification model 132, the object association model 134, and/or the MOT tracker 130 can assign weights to one or more motion parameters and/or one or more appearance parameters. In some embodiments, the re-identification model 132, the object association model 134, and/or the MOT tracker 130 can rank one or more motion parameters and/or one or more appearance parameters. In certain embodiments, the re-identification model 132, the object association model 134, and/or the MOT tracker 130 can assign tracking IDs based on the weighted and/or ranked result of the motion model and/or one or more appearance model and one or more criteria, for example, one or more predetermined thresholds. In some embodiments, the re-identification model 132, the object association model 134, and/or the MOT tracker 130 can determine a first object in the set of first detected objects and a second object in the set of second detected objects to have a same tracking ID (e.g., merge the first object and the second object) if the weighted and/or ranked result of the motion model and/or one or more appearance model meets one or more criteria, for example, higher than one or more predetermined thresholds.

In certain embodiments, the re-identification model 132, the object association model 134, and/or the MOT tracker 130 can determine a similarity metric between a first object in the set of first detected objects and a second object in the set of second detected objects, determine the similarity metric to be higher than a predetermined threshold, and determine the first object and the second object to have a same tracking ID and/or re-assign a tracking ID to the first object and/or the second object. In some embodiments, the re-identification model 132, the object association model 134, and/or the MOT tracker 130 can determine a similarity distance between a first object in the set of first detected objects and a second object in the set of second detected objects, determine the similarity metric to be higher than a predetermined threshold, and determine the first object and the second object to have a same tracking ID and/or re-assign a tracking ID to the first object and/or the second object.

In certain embodiments, the re-identification model 132, the object association model 134, and/or the MOT tracker 130 can determine a similarity metric between a first object in the set of first detected objects and a second object in the set of second detected objects. In some examples, the re-identification model 132, the object association model 134, and/or the MOT tracker 130 can determine a spatial relationship of the first object and the second object. In some examples, the re-identification model 132, the object association model 134, and/or the MOT tracker 130 can determine whether the similarity metric meets a similarity criterion and/or whether the spatial relationship meets a spatial criterion. In some embodiments, if both the similarity criterion and the spatial criterion are met, the re-identification model 132, the object association model 134, and/or the MOT tracker 130 can determine the first object and the second object to have a same tracking ID and/or re-assign a tracking ID to the first object and/or the second object (e.g., merge the first object and the second object).

In certain examples, the system 100 combines the re-identification model 132 with the motion model 136 to assign the tracking IDs. In some examples, the system can perform fusion of sensor feeds between narrow and wide band sensors where appearances still look similar between sensors after image matching since both have similar scale, rotation, and/or the like. In some examples, performing fusion of sensor feeds refers to the process of combining data or from multiple sensors to improve the overall accuracy, reliability, and/or completeness of data being gathered about a system or environment.

According to certain embodiments, the MOT tracker 130 determines a spatial context 138 of one or more objects. In some embodiments, the spatial context includes a spatial relationship among different objects (e.g., two or more detected objects). In certain embodiments, the spatial relationship includes a spatial graph. In some embodiments, the MOT tracker 130 includes a spatial graph matching module along with appearance and motion to more robustly fuse sensor feeds 110 among different sensors. In certain embodiments, the MOT tracker 130 can use temporal context (e.g., the track trajectory and appearance changes, over time, of each sensor feed) to track objects, for example, establishing the initial tracks or assigning initial tracking IDs.

According to some embodiments, the object association model 134 (e.g., the object association module) uses or includes an optimization algorithm (e.g., Hungarian algorithm, etc.) that takes into consideration motion and/or distance, appearance similarity, spatial context, and/or the like, to determine tracking ID assignment. In some embodiments, the object association model 134 includes one or more association functions, for example, association functions for associating objects in different frames as one object. In the example illustrated in FIG. 4, the object tracking result 445 generated by the object tacker process 440 (e.g., using one or more object association models) includes a set of re-identified tracking IDs. For example, the set of second detected objects (e.g., object 5 and object 6) in the image frame 422 are assigned to tracking IDs matching to the set of first detected objects (e.g., object 1 and object 2) in the image frame 412.

According to certain embodiments, the object association model 134 may use spatial context 138, the motion model 136 (e.g., more complex motion model), and/or a different association algorithm for fusion. In some embodiments, for low confidence image matching and/or detection track matching scenarios, the object tracking system 100 can use image matching at neighboring frames (e.g., adjacent frames) to ensemble results since for high frame rate videos, scene/objects may look very similar, and objects may not move much between neighboring frames. In certain embodiments, the MOT tracker 130 may perform track initialization process 142, track update process 144, and/or track deletion process 146 (e.g., merging objects). In some embodiments, the MOT tracker 130 may perform track initialization process 142, track update process 144, and/or track deletion process 146, based on inputs from the object association model 134.

According to some embodiments, to further improve runtime efficiency, if objects are sparse in an image, the object tracking system 100 can use object region aware image matching to only match images for certain parts of the images to save computation time. In certain embodiments, the object tracking system 100 can sample templates (e.g., structured templates) only for the regions where there are objects of interest and potentially make image matching more accurate for these regions.

According to certain embodiments, when determining the similarity of two objects in two images (e.g., spatial overlap, similarity, etc.), the system can use at least one of the one or more image registration scores in determining whether two objects are an object of a same tracking ID depending on the image registration score of the image registration process (e.g., image registration score of the transformation solution, etc.). In some examples, a transformation solution corresponding to a high image registration score lends more confidence that spatial overlap or similarity (or lack thereof) is indicative of a duplicate track.

In some embodiments, the system can use the one or more image registration scores to determine whether a de-duplicated track should be unmerged. For example, there may be a time two tracks are merged, but later information indicates they should separate into their individual tracks. In this example, the system does not unmerge if the one or more image registration scores are low (e.g., at least one of the one or more image registration scores is lower than a threshold), as that could potentially introduce a faulty signal.

In certain embodiments, the system can use the one or more image registration scores to determine whether two tracks should be merged. For example, if the object tracker determines that two objects should be merged (including, but not limited to based on spatial overlap), the system does not merge unless (or until) the corresponding transformation solution correspond to at least one high image registration score. As an example, making decisions based on a low image registration time step could introduce mismatches that are more difficult to undo. In some examples, waiting for an image registration iteration corresponding to a high image registration score allows the system to more likely to filter out false positive matches, while not rejecting true positives.

In some embodiments, the object tracking system 100 may include a storage repository (not shown) (e.g., a data repository) can include one or more sensor feeds, one or more aggregated sets of sensor feeds, one or more tracked objects (e.g., with tracking IDs), one or more temporal contexts, one or more spatial contexts, and/or the like. The repository may be implemented using any one of the configurations described below. A data repository may include random access memories, flat files, XML files, and/or one or more database management systems (DBMS) executing on one or more database servers or a data center. A database management system may be a relational (RDBMS), hierarchical (HDBMS), multidimensional (MDBMS), object oriented (ODBMS or OODBMS) or object relational (ORDBMS) database management system, and the like. The data repository may be, for example, a single relational database. In some cases, the data repository may include a plurality of databases that can exchange and aggregate data by data integration process or software application. In an exemplary embodiment, at least part of the data repository may be hosted in a cloud data center. In some cases, a data repository may be hosted on a single computer, a server, a storage device, a cloud server, or the like. In some other cases, a data repository may be hosted on a series of networked computers, servers, or devices. In some cases, a data repository may be hosted on tiers of data storage devices including local, regional, and central.

In certain embodiments, various components in the object tracking system 100 can interact with one another via a software interface. In some embodiments, a software interface includes an application programming interface (API), a web service interface, retrieving information from a file, retrieving information from a data repository, and/or the like. In some cases, various components in the object tracking system 100 can execute software or firmware stored in non-transitory computer-readable medium to implement various processing steps. Various components and processors of the object tracking system 100 can be implemented by one or more computing devices including, but not limited to, circuits, a computer, a cloud-based processing unit, a processor, a processing unit, a microprocessor, a mobile computing device, and/or a tablet computer. In some cases, various components of the object tracking system 100 (e.g., the detection and transformation processor 120, the multiple object tracker 130, etc.) can be implemented on a shared computing device. Alternatively, a component of the object tracking system 100 can be implemented on multiple computing devices. In some implementations, various modules and components of the object tracking system 100 can be implemented as software, hardware, firmware, or a combination thereof. In some cases, various components of the object tracking system 100 can be implemented in software or firmware executed by a computing device.

Various components of the object tracking system 100 can communicate via or be coupled to via a communication interface, for example, a wired or wireless interface. The communication interface includes, but is not limited to, any wired or wireless short-range and long-range communication interfaces. The short-range communication interfaces may be, for example, local area network (LAN), interfaces conforming known communications standard, such as Bluetooth^{®} standard, IEEE 802 standards (e.g., IEEE 802.11), a ZigBee^{®} or similar specification, such as those based on the IEEE 802.15.4 standard, or other public or proprietary wireless protocol. The long-range communication interfaces may be, for example, wide area network (WAN), cellular network interfaces, satellite communication interfaces, etc. The communication interface may be either within a private computer network, such as intranet, or on a public computer network, such as the internet.

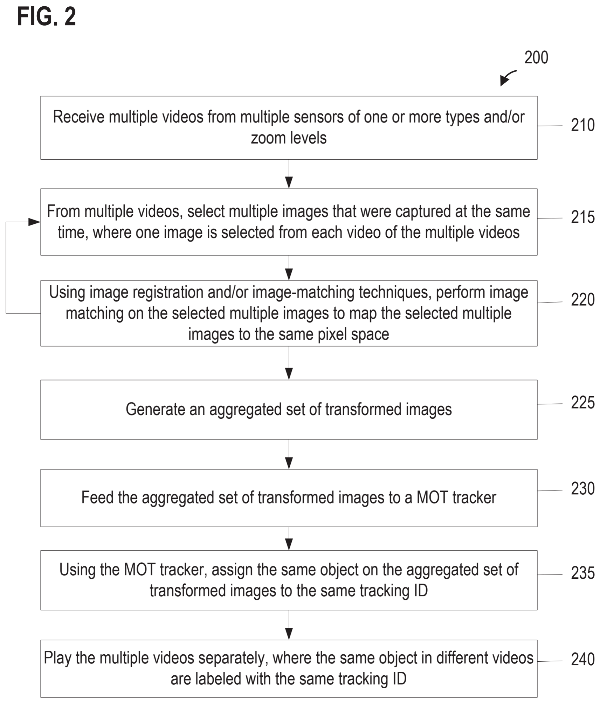

FIG. 2 is a simplified diagram showing a method 200 for multiple sensor object tracking according to certain embodiments of the present disclosure. This diagram is merely an example. One of ordinary skill in the art would recognize many variations, alternatives, and modifications. The method 200 for multiple sensor object tracking includes processes 210, 215, 220, 225, 230, 235, and 240. Although the above has been shown using a selected group of processes for the method 200 for multiple sensor object tracking, there can be many alternatives, modifications, and variations. For example, some of the processes may be expanded and/or combined. Other processes may be inserted into those noted above. Depending upon the embodiment, the sequence of processes may be interchanged with others replaced. Further details of these processes are found throughout the present disclosure.

In some embodiments, some or all processes (e.g., steps) of the method 200 are performed by a system (e.g., the computing system 600). In certain examples, some or all processes (e.g., steps) of the method 200 are performed by a computer and/or a processor directed by a code. For example, a computer includes a server computer and/or a client computer (e.g., a personal computer). In some examples, some or all processes (e.g., steps) of the method 200 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to some embodiments, at process 210, the system receives multiple videos from multiple sensors of one or more types of sensors (e.g., narrow-band camera, wide-band camera, infrared camera, electro-optic (EO) camera, satellite camera, etc.) and/or the same type of sensor with one or more zoom levels (e.g., EO narrow and EO wide). For example, the EO narrow Video A includes original images A1, A2, etc., and EO wide video B includes original images B1, B2, etc., where original images A1 and B1 were captured at a same time, original images A2 and B2 were captured at another same time, and original images A3 and B3 were captured at yet another same time.

In certain embodiments, at process 215, from the received multiple videos, the system selects multiple images that were captured at the same time or approximately at the same time (e.g., within 0.1 second, within 1 second, within 5 seconds, etc.), wherein one image is selected from each video of the received multiple videos. As an example, the system selects original image A1 from EO narrow Video A, and selects original image B1 from EO wide video B. In some embodiments, at process 220, using image registration and/or image matching techniques (e.g., homography transform, AWOGs, CFOG, etc.), the system performs image registration on the selected multiple images to map (e.g., transform) the selected multiple images to the same pixel space. For example, using image matching techniques, the system performs image matching on original images A1 and B1 in order to map original images A1 and B1 to the same pixel space.

According to some embodiments, the system may repeat processes 215 and 220 at different times to form multiple groups of transformed (e.g., mapped) multiple images. In certain embodiments, the system forms a first group of transformed A1 and B1, a second group of transformed A2 and B2, and a third group of transformed A3 and B3. In certain embodiments, at process 225, the system generates an aggregated set of transformed images. In some embodiments, the aggregated set of transformed images includes the multiple groups of transformed images, where a group of transformed images are arranged adjacent to each other. For example, the aggregated set of transformed images includes the transformed images A1, B1, A2, B2, A3, B3, and the like.

According to certain embodiments, at process 230, the system feeds the aggregated set of transformed images sequentially into a MOT tracker (e.g., a MOT 130, a detector and a MOT tracker). In some embodiments, at process 235, using the MOT tracker, the system assigns the same object on these image-matched multiple images (selected from different videos) to the same tracking ID. As an example, using the detector and the MOT tracker, the system assigns the same object on these transformed images A1, B1, A2, B2, A3, B3, ... to the same tracking ID.

According to certain embodiments, one or more aspects of the method 200 use a computing model (e.g., a machine-learning model). In certain embodiments, a model, also referred to as a computing model, includes a model to process data. A model includes, for example, an artificial intelligence (AI) model, a machine-learning (ML) model, a deep-learning (DL) model, an artificial neural network (ANN), a deep neural network (DNN), an image processing model, an algorithm, a rule, other computing models, and/or a combination thereof.

According to some embodiments, at process 240, the system is configured to play the multiple videos (from the multiple types of sensors) separately, where the same object in different videos are labeled with the same tracking ID. For example, the system plays EO narrow Video A (including original images A1, A2, A3, etc.) and plays EO wide video B (including original images B1, B2, B3, etc.) separately, where the same object is labeled with the same tracking ID in these two different videos A and B.

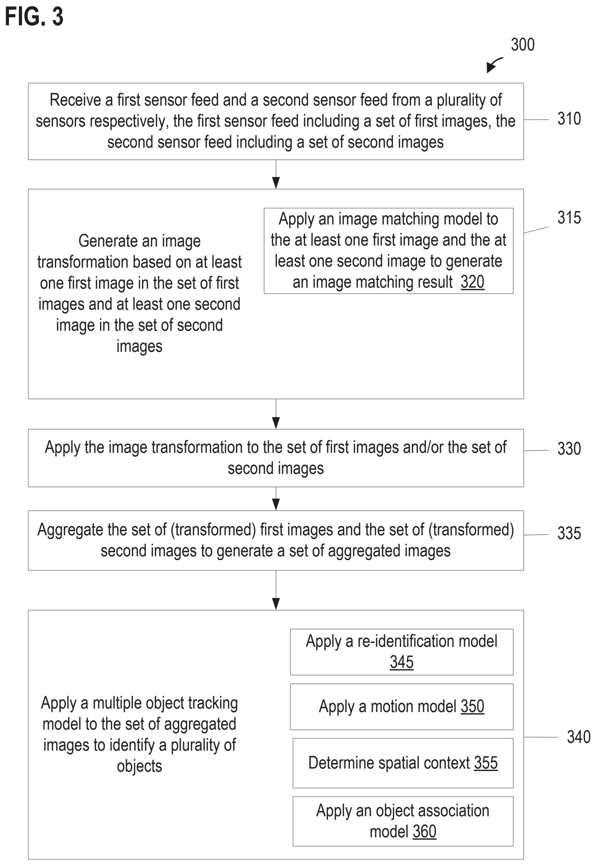

FIG. 3 is a simplified diagram showing a method 300 for multiple sensor object tracking according to certain embodiments of the present disclosure. This diagram is merely an example. One of ordinary skill in the art would recognize many variations, alternatives, and modifications. The method 300 for multiple sensor object tracking includes processes 310, 315, 320, 325, 330, 335, 340, 345, 350, 355, and 360. Although the above has been shown using a selected group of processes for the method 300 for multiple sensor object tracking, there can be many alternatives, modifications, and variations. For example, some of the processes may be expanded and/or combined. Other processes may be inserted into those noted above. Depending upon the embodiment, the sequence of processes may be interchanged with others replaced. Further details of these processes are found throughout the present disclosure.

In some embodiments, some or all processes (e.g., steps) of the method 300 are performed by a system (e.g., the computing system 600). In certain examples, some or all processes (e.g., steps) of the method 300 are performed by a computer and/or a processor directed by a code. For example, a computer includes a server computer and/or a client computer (e.g., a personal computer). In some examples, some or all processes (e.g., steps) of the method 300 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to some embodiments, at process 310, the system receives a first sensor feed and a second sensor feed from a plurality of sensors respectively, where the first sensor feed includes a set of first images and the second sensor feed includes a set of second images. In certain embodiments, the first sensor feed (e.g., video feed) is received from a first sensor, the second sensor feed is received from a second sensor different from the first sensor. In some embodiments, the first sensor is a different type of sensor from the second sensor. In certain embodiments, the first sensor has a different band from the second sensor. In some embodiments, the first sensor has a different zoom level from the second sensor. In certain embodiments, the first sensor has a different view angle from the second sensor.

According to certain embodiments, the sensor feeds (e.g., video feeds) are from two or more image sensors. In some embodiments, the video feeds are from two or more types of image sensors. In certain embodiments, each video feed includes a set of images (e.g., image frames). In some embodiments, the video feeds include a first video (e.g., a video stream) and a second video, which are corresponding to a set of first images and a set of second images. In certain embodiments, the first video feed and the second video feed are captured by different image sensors. In some embodiments, the first video feed and the second video feed are captured by different types of image sensors (e.g., narrow band image sensor, wide band image sensor, EO image sensor, IR image sensor, satellite image sensor, etc.).

According to some embodiments, the system identifies a set of detected objects in the video feeds. In certain embodiments, the system identifies a set of first detected objects in the first video and/or one or more first images in the set of first images. In some embodiments, the system identifies a set of second detected objects in the second video and/or one or more second images in the set of second images.

According to certain embodiments, at process 315, the system generates an image transformation based on at least one first image in the set of first images and at least one second image in the set of second images. In some embodiments, at process 320, which may be a part of the process 315, the system applies an image registration and/or image-matching model (e.g., homography transform, AWOGs, CFOG, etc.) to the at least one first image and the at least one second image to generate an image registration result.

According to some embodiments, the system determines one or more transformation updates based on a plurality of subsequent images after an image transformation (e.g., an initial image transformation, an image transformation with high confidence) is generated, instead of generating a new image transformation. In certain embodiments, the system can generate a subsequent image transformation based on one or more image transformations and the one or more transformation updates. In some examples, the one or more transformation updates are scaled based on corresponding image registration scores and/or collection times (e.g., earlier time, most recent time) of the image frames. Some embodiments of image transformations and transformation updates are described corresponding to FIG. 5.

In certain embodiments, at process 325, which may be a part of part of the process 325, the system generates the image transformation based on the image matching result. In some embodiments, the system applies one or more image registrations and/or image-matching techniques (e.g., homography transform, AWOGs, CFOG, etc.) to the first sensor feed and the second sensor feed. In certain embodiments, the system applies one or more image registrations and/or image-matching techniques to one or more first images in the set of first images and one or more second images in the set of second images. In certain embodiments, the system generates the image transformation using the one or more image registration and/or image-matching techniques. In some embodiments, the system generates an image transformation between the first video and the second video using the one or more image registration and/or image-matching techniques, for example, in a same pixel space.

According to certain embodiments, one or more aspects of the method 300 use a computing model (e.g., a machine-learning model). In certain embodiments, a model, also referred to as a computing model, includes a model to process data. A model includes, for example, an artificial intelligence (AI) model, a machine-learning (ML) model, a deep-learning (DL) model, an artificial neural network (ANN), a deep neural network (DNN), an image processing model, an algorithm, a rule, other computing models, and/or a combination thereof.

According to some embodiments, at process 330, the system applies the image transformation (e.g., image registration/matching techniques) to the set of first images and/or the set of second images. In certain embodiments, the system applies the image transformation to generate a set of transformed (e.g., mapped) first images. In certain embodiments, the system applies the image transformation to the set of second images to generate a set of transformed second images. In some embodiments, the image transformation is applied to the first set of images or the set of second images. In certain embodiments, the image transformation is applied to only one of the first set of images and the set of second images.

According to certain embodiments, at process 335, the system aggregates the set of first images (e.g., the set of transformed first images) and the set of second images (e.g., the set of transformed second images) to generate a set of aggregated images. In some embodiments, the system aggregates the set of first images (e.g., the set of transformed first images) with the set of second images (e.g., the set of transformed second images) to generate the set of aggregated images based on temporal context. In certain embodiments, the system arranges a first image in the set of first images captured at a first time and a second image in the set of second images captured approximately (e.g., within 0.1 second, within 1 second, within 5 seconds, etc.) at the first time adjacent to each other in the set of aggregated images. In some embodiments, the system aggregates the set of transformed first images and the set of transformed second images to generate a set of aggregated images, including arranging a transformed first image in the set of transformed first images captured at a first time and a transformed second image in the set of transformed second images captured approximately at the first time adjacent to each other.

FIG. 4 is an example of a multiple sensor object tracking 400. FIG. 4 is merely an example. In this example, two video feeds (e.g., sensor feeds) 410 and 420 are fed into an image matching algorithm. For example, the objects detected in the two video feeds 432 appear to be noisy, for example, not aligned. As an example, the image frame 412 from the video feed 410 and the image frame 422 from the video feed 420 are captured by two different sensors or two different types of sensors approximately at the same time (e.g., within 0.1 second, within 1 second, within 5 seconds, etc.). In some examples, the image matching algorithm image registration process 430 indicates the detections across the video feeds 410 and 420 are noisy (e.g., tracking ID 2 does not match tracking ID 6). In certain examples, the image frame 422 is transformed (e.g., mapped), for example, based on image matching results. For example, the transformed image frame 422 is arranged as a subsequent image frame of the image frame 412 in the set of aggregated images.

According to some embodiments, the set of first detected objects are associated with or assigned to a set of first tracking IDs and the set of second detected objects are associated with or assigned to a set of second tracking IDs different from the set of first tracking IDs. In certain embodiments, the system can match non-overlapping detections over time in a video feed (e.g., can match moving cars or people). In some embodiments, the system (e.g., MOT tracker) can match the set of first detected objects and the set of second detected objects by processing the set of aggregated images. In some embodiments, the system can match the set of first detected objects and the set of second detected objects by processing the set of aggregated images, using the object association model. In some embodiments, the non-overlapping detections across video feeds, that might be the result of the error in the image matching step, are very similar to the non-overlapping detections of moving objects, such as vehicles, in a single video feed over time. In certain embodiments, assuming the image matching error characteristics do not drastically change over time, the system may leverage a motion model, for example, to reliably generate a single set of tracks across all video feeds.

According to certain embodiments, at process 340, the system applies a multiple object tracking model to the set of aggregated images to identify a plurality of objects. In some embodiments, the system applies a re-identification model (345), applies a motion model (350), determines spatial context (355), and/or applies an object association model (360) to the set of aggregated images, for example, to identify the plurality of objects across at least two images in the set of aggregated images. In certain embodiments, the system applies an appearance model to the set of aggregated images to identify the plurality of objects across at least two images in the set of aggregated images. In some embodiments, the system applies an optimization algorithm to the first result and the second result to identify the plurality of objects across at least two images in the set of aggregated images.

According to some embodiments, the system determines a spatial relationship (e.g., spatial context) between two objects in the set of first detected objects. In certain embodiments, the spatial relationship includes a spatial graph. In some embodiments, a spatial graph includes one or more nodes of spatial locations, usually given by coordinates in one, two, or three dimensions. In some embodiments, the spatial graph includes a distance between two or more nodes. In certain embodiments, the spatial relationship includes relative positions of two or more objects. In certain embodiments, the system can be leveraged to match non-overlapping detections over time in a video feed. In some embodiments, the system includes a motion model. In certain embodiments, the motion model includes a linear motion model. In some embodiments, the motion model includes a filter that estimates the state of a linear dynamic system from a series of noisy measurements. For example, in some embodiments, the motion model includes a Kalman filter.

According to some embodiments, the system includes a re-identification (ReID) model. In certain embodiments, the re-identification model includes an appearance model (e.g., a similarity machine-learning model, a regression similarity learning model, a classification similarity learning model, a ranking similarity learning model, etc.). In some embodiments, the re-identification model includes a deep neural network-based model to capture appearance similarity. In some examples, the re-identification model includes a Siamese neural network and/or the like. In certain embodiments, the re-identification model determines one or more similarity metrics between the set of first detected objects and the set of second detected objects. In some embodiments, the re-identification model determines one or more similarity distances between the set of first detected objects and the set of second detected objects. In the example illustrated in FIG. 4, the set of first detected objects identified from the first sensor feed 410 include tracking ID 1 and tracking ID 2, and the set of second detected objects identified from the second sensor feed 420 include tracking ID 5 and ID 6. In this example, the re-identification model may determine tracking ID 1 is similar to tracking ID 5 and tracking ID 2 is similar to tracking ID 6.

According to certain embodiments, the re-identification model, the object association model, and/or the system can match and/or associate objects based on motion and/or appearance. In some embodiments, the re-identification model, the object association model, and/or the system can assign weights to one or more motion parameters and/or one or more appearance parameters. In certain embodiments, the re-identification model, the object association model, and/or the system can assign tracking IDs based on the weighted result of the motion model and/or one or more appearance model and one or more criteria, for example, one or more predetermined thresholds. In some embodiments, the re-identification model, the object association model, and/or the system can determine a first object in the set of first detected objects and a second object in the set of second detected objects to have a same tracking ID if the weighted result of the motion model and/or one or more appearance model meets one or more criteria, for example, higher than one or more predetermined thresholds.

In certain embodiments, the re-identification model, the object association model, and/or the system can determine a similarity metric between a first object in the set of first detected objects and a second object in the set of second detected objects, determine the similarity metric to be higher than a predetermined threshold, and determine the first object and the second object to have a same tracking ID and/or re-assign a tracking ID to the first object and/or the second object. In some embodiments, the re-identification model, the object association model, and/or the system can determine a similarity distance between a first object in the set of first detected objects and a second object in the set of second detected objects, determine the similarity metric to be higher than a predetermined threshold, and determine the first object and the second object to have a same tracking ID and/or re-assign a tracking ID to the first object and/or the second object.

In certain embodiments, the re-identification model, the object association model, and/or the system can determine a similarity metric between a first object in the set of first detected objects and a second object in the set of second detected objects and a spatial relationship of the first object and the second object, determine whether the similarity metric meets a similarity criterion and whether the spatial relationship meets a spatial criterion. In some embodiments, if both the similarity criterion and the spatial criterion are met, the re-identification model, the object association model, and/or the system can determine the first object and the second object to have a same tracking ID and/or re-assign a tracking ID to the first object and/or the second object.

In certain examples, the system combines the re-identification model with the motion model to assign the tracking IDs. In some examples, the system can perform fusion of sensor feeds between narrow and wide band sensors where appearances still look similar between sensors after image matching since both have similar scale, rotation, and/or the like.

According to certain embodiments, the system determines a spatial context of one or more objects. In some embodiments, the spatial context includes a spatial relationship among different objects (e.g., two or more detected objects). In certain embodiments, the spatial relationship includes a spatial graph. In some embodiments, the system includes a spatial graph matching module along with appearance and motion to more robustly fuse sensor feeds (e.g., sensor feeds 110) among different sensors. In certain embodiments, the system can use temporal context (e.g., the track trajectory and appearance changes over time of each sensor feed) to track objects, for example, establishing the initial tracks or assigning initial tracking IDs.

According to some embodiments, the object association model (e.g., the object association module) uses or includes an optimization algorithm (e.g., Hungarian algorithm, etc.) that takes into consideration of motion and/or distance, appearance similarity, spatial context, and/or the like, to determine tracking ID assignment. In some embodiments, the object association model includes one or more association functions, for example, association functions for associating objects in different frames as one object. In the example illustrated in FIG. 4, the object tracking result 445 generated by the object tacker process 440 (e.g., using one or more object association models) includes a set of re-identified tracking IDs. For example, the set of second detected objects (e.g., object 5 and object 6) in the image frame 422 are assigned to tracking IDs matching to the set of first detected objects (e.g., object 1 and object 2) in the image frame 412.

According to certain embodiments, the object association model may use spatial context, the motion model (e.g., more complex motion model), and/or different association algorithm for fusion. In some embodiments, for low confidence image matching and/or detection track matching scenarios, the system can use image matching at neighboring frames to assemble results since for high frame rate videos, scene/objects will look very similar, and objects will not move much between neighboring frames.

According to some embodiments, to further improve runtime efficiency, if objects are sparse in an image, the system can use object region aware image matching to only match images for certain part of the images to save computation time. In certain embodiments, the system can sample templates (e.g., structured templates) only for the regions where there are objects of interest and potentially make image matching more accurate for these regions.

According to certain embodiments, when determining the similarity of two objects in two images (e.g., spatial overlap, similarity, etc.), the system can use at least one of the one or more image registration scores in determining whether two objects are an object of a same tracking ID depending on the image registration score of the image registration process (e.g., image registration score of the transformation solution, etc.). In some examples, a transformation solution corresponding to a high image registration score lends more confidence that spatial overlap or similarity (or lack thereof) is indicative of a duplicate track.

In some embodiments, the system can use the one or more image registration scores to determine whether a de-duplicated track should be unmerged. For example, there may be a time two tracks are merged, but later information indicates they should separate into their individual tracks. In this example, the system does not unmerge if the one or more image registration scores are low (e.g., at least one of the one or more image registration scores is lower than a threshold), as that could potentially introduce a faulty signal.

In certain embodiments, the system can use the one or more image registration scores to determine whether two tracks should be merged. For example. if the object tracker determines that two objects should be merged (including, but not limited to based on spatial overlap), the system does not merge unless (or until) the corresponding transformation solution corresponds to at least one high image registration score. As an example, making decisions based on a low image registration time step could introduce mismatches that are more difficult to undo. In some examples, waiting for an image registration iteration corresponding to a high image registration score allows the system to more likely to filter out false positive matches, while not closing the door to true positives.

FIG. 5 is a simplified diagram showing a method 500 for image registrations according to certain embodiments of the present disclosure. This diagram is merely an example. One of ordinary skill in the art would recognize many variations, alternatives, and modifications. The method 500 for image registrations includes processes 510, 515, 520, 525, 530, 535, 540, 545, 550, 555, 560, and 565. Although the above has been shown using a selected group of processes for the method 500 for image registrations, there can be many alternatives, modifications, and variations. For example, some of the processes may be expanded and/or combined. Other processes may be inserted into those noted above. Depending upon the embodiment, the sequence of processes may be interchanged with others replaced. Further details of these processes are found throughout the present disclosure.

In some embodiments, some or all processes (e.g., steps) of the method 500 are performed by a system (e.g., the computing system 600). In certain examples, some or all processes (e.g., steps) of the method 500 are performed by a computer and/or a processor directed by a code. For example, a computer includes a server computer and/or a client computer (e.g., a personal computer). In some examples, some or all processes (e.g., steps) of the method 500 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to some embodiments, the challenge of sensor fusion lies in the fact that sensor feeds can differ in so many ways, that algorithms must be configured in advance and/or learn to adapt to the differences to maintain accuracy, and it must do it quickly enough to remain relevant to the situation, often demanding results in real time. Without the ability to adapt to errors or correct them over time, in certain embodiments, even robust MOT methods are bound to eventually fail to de-duplicate objects (false negatives) or to incorrectly match objects that are not the same (false positives).

In some embodiments, image registration is the process of mathematically aligning two images that capture overlapping scenes by transforming one or both images into a single domain, allowing one to create a unified view of a single scene. In sensor fusion, in certain embodiments, registering images from two sensor feeds allows an object tracking system to identify any overlapping objects present in both images. In some embodiments, as these are scenes with moving cameras and objects, image registration techniques that adapt to the temporal changes in perspective, camera motion, zoom level, color space, and other sensor and image parameters of the two sensor feeds are important in determining object similarity (e.g., track similarity), as well as adapting to errors introduced by unsynchronized time stamps.

According to certain embodiments, the object tracking system can use improved image registration techniques, which are useful in sensor fusion, including (1) using information from fused tracks to better solve for image registration, and/or (2) storing information in a way that makes it more robust to address individual failures. In some embodiments, these registration enhancements allow the image registration process (e.g., the method 500, etc.) to continue running even with registration failures, and make subsequent registration successes more likely.

According to some embodiments, at process 510, the system receives and/or accesses one or more image transformations that were generated based on based on a plurality of previous images (e.g., A(i), B(i), etc.) from a plurality of sensor feeds (e.g., live sensor feeds, live video feeds, live video feeds from image sensors, etc.). In certain embodiments, an image transformation, also referred to as an image registration transformation, is a matrix, where each matrix element corresponds to a numerical value. In certain embodiments, an image transformation is a matrix, where each matrix element corresponds to a numerical value to be used for transformation. In some embodiments, the image transformation is a matrix of a plurality of selected parameters. In certain embodiments, the selected parameters include sensor and image parameters, such as, camera motion, zoom level, color space, movement, adjustment, direction, rotation, stretch, brightness, contrast, gamma, and/or other sensor and image parameters. For example, the image transformation is a 3x3 matrix. As an example, the image transformation corresponding to previous images are represented as T(i). In some embodiments, the one or more image transformations are determined using image registration process and/or image matching process. In certain embodiments, an image transformation corresponds to an image registration score (e.g., how well and/or confident for the registration) that was generated using the image registration process. In some embodiments, the image registration process includes using one or more image registration and/or image-matching models (e.g., homography transform, AWOG, CFOG, etc.). In certain embodiments, the one or more image transformations were generated during one or more previous image registration processes.

According to certain embodiments, at process 515, the system receives a plurality of images (e.g., A(j), B(j), i<j where i is of the example of the process 510 etc.) from the plurality of sensor feeds. In some embodiments, at process 520, the system generates a sensor image transformation for at least one of the plurality of sensor feeds. In some examples, the process 520 is referred to as a sensor image registration process. In certain embodiments, the system generates a sensor image transformation for each sensor feed of the plurality of sensor feeds. In some embodiments, the system registers images within a sensor feed using the sensor image transformation to estimate the aggregated changes of a sensor generating the sensor feed. In certain embodiments, using the sensor image transformation with each sensor feed, the system can generate a transformation solution accounting for the change in each sensor (e.g., each camera position changed from the previous iteration). In some embodiments, at process 525, the system applies the sensor image transformation to a corresponding sensor feed, for example, to generate a sensor-compensated image frame.

In some embodiments, for each video feed, the system registers each image frame (e.g., image frame before transformation, etc.) at a time (e.g., time j) against its previous image at a previous time (e.g., time i, i<j) of a same video feed (e.g., register image frame A2 against its previous image frame A1, register image frame B2 against its previous image frame B1, etc.). In some examples, this additional step is performed by updating all track positions based on how much the sensor (e.g., camera) has moved from the previous iteration. In certain embodiments, the system separates the change in an object's position from the change in sensor motion (e.g., camera motion), where the image registration process would otherwise have to absorb as error. For example, if a first sensor (e.g., Camera 1) shifts to the left between frames, and a second sensor (e.g., Camera 2) moves a small amount to the right, the system applies a first sensor image transformation to a first sensor feed generated by the first sensor and a second sensor image transformation to a second sensor feed generated by the second sensor.

In certain embodiments, the system generates a sensor image transformation for the second sensor feed, for example, an image transformation accounting for both the movement of the first sensor and the movement of the second sensor, before registering an image frame from the second sensor feed to an image frame from the first sensor feed. In some embodiments, the sensor image registration process can be done using a faster algorithm with a lower-dimensional solution space. In certain embodiments, the system generates the sensor image transformation using images of lower resolutions than the images received.

In some embodiments, the images include metadata around the border of the image. In certain embodiments, the images include the date and time in a set position, leaving the same number at the same spot in the image. In some embodiments, the system masks the metadata in advance to avoid the faulty signal. In certain embodiments, a mask can be created by simply trimming a hard-coded border around the image, or e.g., by using optical flow to mask pixels that do not change intensity values over a given time span. In some embodiments, the system updates the sensor-compensated image frame by applying the mask, for example, to generate masked image frame.

According to some embodiments, at process 530, the system generates a transformation update associated with the one or more image transformations based on the plurality of images using a second image registration model. In certain embodiments, the second registration model is different from the first image registration model. In some embodiments, the second registration model includes a second set of registration parameters, and the first registration model includes a first set of registration parameters. In certain embodiments, a set of registration parameters includes one or more image parameters, one or more sensor parameters, and/or the like. In some embodiments, an image parameter includes one or more parameters for images (e.g., images) such as, for example, resolutions, scales, color space parameters, rotation, stretch, brightness, contrast, gamma, and/or the like. In certain embodiments, a sensor parameter includes camera motion, zoom level, camara direction, camera view angle, camera adjustment, and/or the like.

In some embodiments, the system generates the transformation update by applying the second image registration model to the plurality of sensor-compensated images. In certain embodiments, the system applies the one or more image transformations to the plurality of images and/or the plurality of sensor-compensated images to generate a set of transformed images (e.g., transformed based on the previous transformation). In some embodiments, the system generates the transformation update based on the one or more previous images and the set of first transformed images.

In some embodiments, the system generates an updated image transformation (e.g., a third image transformation) using the transformation update. In certain embodiments, the system generates a transformation solution including one or more image transformations, the transformation update, and/or the updated image transformation. In certain embodiments, the system applies one or more previous image transformations to the plurality of images to generate a plurality of transformed images. In some embodiments, the system generates the transformation update associated with the one or more image transformations and a corresponding image registration score based on the plurality of transformed images. In certain embodiments, the system determines a transformation update based on the one or more image transformations that is generated based on the plurality of previous images. In some embodiments, it has the technical advantage to generate a more accurate image transformation because the image registration algorithm works better when the images are already aligned (e.g., fairly aligned), for example, after applying the image transformation (e.g., a previous image transformation) to the plurality of images received, and the system determines the transformation update based on the plurality of transformed images.

In certain embodiments, the determined transformation update makes the image registration process more likely to succeed, as the received images can be transformed into an image space that was correct at the previous step. In some embodiments, the image transformation is applied to a first image frame received from a first sensor feed and/or a second image frame received from a second sensor feed. In certain embodiments, the transformation update is associated with an image registration score. In some embodiments, the image registration score of the transformation update is determined based on the plurality of images.

In certain embodiments, the transformation update is U(j). In some embodiments, the transformation update is a matrix. In certain embodiments, the image transformation for the plurality of received images (e.g., A(j), B(j), etc.), T(j), is updated as T(i)xU(j). In some examples, U(j) is an identity matrix, such that T(j)=T(i). In certain embodiments, the transformation update includes a matrix and a vector. In some embodiments, the transformation update includes a matrix element as a function. In certain embodiments, the transformation update includes a matrix element as a function that can be applied to two or more image transformations previously generated. In some embodiments, the transformation update includes a subset of image transformation parameters of a complete image transformation.

In certain embodiments, the system can use a partial transformation update based on corresponding confidences scores. For example, the transformation update includes an update associated with N parameters and the system uses only a partial transformation update associated with M parameters (e.g., M<N). In some embodiments, the system generates one or more image registration scores corresponding to the transformation update using the image registration model, where each image registration score being associated with a transformation parameter (e.g., one of the one or more transformation parameters). In certain embodiments, the system generates a partial transformation update based on the transformation update and the one or more image registration scores. In certain embodiments, the system generates a partial transformation update corresponding to a subset of transformation parameters with corresponding image registration scores higher than a threshold (e.g., a predetermined threshold).

In some embodiments, the system generates transformation updates for every image frame (e.g., j=i+1). In certain embodiments, the system generates transformation updates periodically (e.g., every 3 frames, every 5 frames, every 10 frames, etc.). In some embodiments, an image transformation solution, also referred to as a transformation solution, includes one or more image transformations and/or one or more transformation updates. In certain embodiments, the system implements a partial transformation update between image transformation solutions, so that the transformation updates do not need to run at every iteration of receiving an image frame from a sensor feed. It is possible to have the image registration process run faster by only solving for image registration transformations every Nth time step (e.g., every 4th iteration.), for example. Accordingly, in certain embodiments, the image transformation solution encapsulates 4 iterations of change. In some embodiments, the system represents the image transformation as a state matrix and an update to that matrix (rather than a single, updated state matrix), the system can use that previous transformation solution to the update to extrapolate the new image transformation by scaling the previous solution by 1/4. In some embodiments, this effectively treats the previous solution as the solution for the next 3 time iterations, but applies it incrementally rather than only every 4th iteration. In certain embodiments, this can be done both within the images of an individual feed, and between the images of two separate feeds.

According to certain embodiments, at process 535, the system validates the transformation update and/or the transformation solution including the transformation update. In some embodiments, the transformation solution includes the updated image transformation that is updated based on the transformation update and/or the scale factor. In certain embodiments, in response that the transformation solution is associated with a high image registration score (e.g., the corresponding image registration score higher than a threshold), the system can determine the transformation solution including the transformation update and/or the updated image transformation to be validated. In some embodiments, in response that the transformation solution is associated with a low image registration score (e.g., the corresponding image registration score lower than a threshold), the system can determine the transformation solution including the transformation update and/or the updated image transformation to be unvalidated. In certain embodiments, in response that the transformation solution is associated with a high image registration score (e.g., the corresponding image registration score higher than a threshold), the system can determine the transformation solution including the transformation update and/or the updated image transformation to be validated. but the transformation update is very large or small in magnitude, the system can determine that the transformation solution to be unvalidated.

According to some embodiments, at process 540, if the transformation update is not validated (e.g., image registration score not above a threshold and/or transformation changes are too large or too small), the system generates a new image transformation (e.g., using a third image registration model), and/or using at least one of the plurality of images at one or more different image parameters (e.g., a different zoom level, a different image scale, a different view angle, etc.). In some examples, the system can zoom out the image frame and/or uses a third image registration model (e.g., with different modeling parameters) that search for features at a different zoom value. In certain embodiments, a relatively large magnitude of the transform update indicates that either the camera view changed a lot (as in the case of zooming in or panning around), or the transformation update is incorrect.

In some embodiments, the system implements a plurality of registration steps at different image scales (e.g., different zoom levels). In certain examples, this includes increasing or decreasing the searched space, increasing or decreasing image resolution, scaling the image up or down to accommodate different zoom levels, changing the number of candidate transformation solutions before solving for a final solution, and changing the threshold/count criteria for a sufficiently strong solution. In some embodiments, the transformation parameters for image transformations assume some set of properties. For example, one set of transformation parameters are selected when registering low-resolution images against high-resolution images, as in the case of zoomed-in views or cameras of different resolution. As an example, the transformation parameters are selected with smaller images registering against larger images, which is effectively the case when feeds overlap by a small area. In some embodiments, having multiple sets of transformation parameters allows the system to switch between sets in case the view or search space changes enough that the system can no longer confidently solve with the image registration model having existing parameter set, and allows the system to solve registration when there are large shifts in the transformation solution without a known reason.

In some embodiments, the system determines the new image transformation (e.g., the second solution), T(j)', for the plurality of images using revised images of different sensor and/or image parameters (e.g., zoom-out, zoom-in, etc.) and/or one or more different image registration models. If T(j)' is similar to T(j) (e.g., the difference between T(j)' and T(j) is within a threshold), in some embodiments, the system accepts T(j)' as the updated image transformation and/or using the set of modeling parameters for subsequent processing. If T(j)' is different from T(j) (e.g., the difference between T(j)' and T(j) is above a threshold), in certain embodiments, the system discards the transformation update (i.e., unsuccessful), for example, the system will continue using the previous image transformation T(i). If the system determines the transformation update U(j) to be unsuccessful, in some embodiments, the system can use a part of the transformation update (e.g., color transformation) that corresponds to a high image registration score.

According to certain embodiments, at process 545, if the transformation update is validated, the system stores the validated transformation update (e.g., U(j)) and/or the updated image transformation (e.g., T(j)). In some embodiments, the system stores one or more image transformations and/or one or more transformation updates, collectively referred to as transformation solutions, that can be used in the case of a failure in a subsequent image registration process. In certain embodiments, the stored transformation solutions are updated every time there is a successful registration process, so that the most recent transformation solutions are always available. In some embodiments, a registration process includes generates an image transformation and/or a transformation update. In certain embodiments, a registration process includes generating a transformation solution. In some embodiments, a successful registration process refers to an image registration score corresponding to the generated image transformation and/or the generated transformation update being higher than a threshold. In some embodiments, a successful registration process refers to an image registration score corresponding to the generated image transformation and/or the generated transformation update being higher than a predetermined threshold. In certain embodiments, the system can replace the older transformation solutions stored.

According to some embodiments, at process 550, the system applies a scale factor to the transformation update (e.g., the validated transformation update). In some examples, the scale factor includes a scale matrix including a plurality of scale elements. In certain embodiments, the scale factor is determined based on an image registration score associated with the transformation update. In some examples, the system can set a scale factor to the transformation update based on the image registration score. As an example, the scale factor can be proportional to the image registration score associated with the transformation update. In some examples, the scale factor is a number. In certain examples, the scale factor is a scale matrix. For example, if the image registration score is below a predetermined low threshold, the transformation update is not used (e.g., the scale factor is set to 0). In this example, the one or more image transformations are used as-is. As an example, if the image registration score is above a predetermined high threshold, the scale factor is set to 1. In certain embodiments, transformation update is used with a scale factor. In certain examples, the scale factor is set to a value between zero (0) and one (1). In some examples, if the image registration score of U(j) is lower than a threshold, the system sets scale U(j) become closer to the identity matrix, so that T(j) = T(i) × (scaled U(j)). In certain examples, if the image registration score of the solution for U(j) is higher than the threshold, the system sets scale U(j), so that T(j) = T(i) × (scaled U(j)).

According to certain embodiments, if the image registration process is not successful, the system uses one or more steps to determine an image transformation for use. In some examples, the system generates an image transformation using a multi-step process if there is an image registration failure. In certain embodiments, the system tracks how many of the previous registration processes were successful or unsuccessful before there was a change. For example, if the system is successful 5 iterations in a row but fail on the 6th, the success count switches from 5 to 0, and the failure count switches from 0 to 1. As an example, the system uses integer thresholds, where the exact integers are chosen for the domain.

For example, if the failure count is 1, the system reuses the previous registration solution (assuming no change) and adjust the internal tracking logic using an image registration score of 0 so that spatial distance between tracks is not factored into the matching criteria. As an example, this will seed a successful solution on the next iteration.

For example, if the failure count increases to a failure number (e.g., 2) but is below a threshold (e.g., 4), the system first check if there was a solution produced with low confidence. If so, in some examples, the system scales the update proportionally to the image registration score and proceed using that update, allowing the system to explore whether the transformation solution is correct without straying too far from the original position. If it did not produce a matrix solution, the system re-runs an image registration step, but using new parameter values that can search a larger solution space. If successful, in some examples, the system continues with the success and update the transformation solution with previously-successful solutions. If not, in certain examples, the system reuses the second-to-last successful solution (as the last solution already yielded a failure) but continue with a 0 image registration score passed on to the tracking logic.

In some examples, if the failure count increases above the threshold number (e.g., 4) but below a high threshold number (e.g., 7), the system first applies a successful transformation solution (e.g., the 3rd-to-last successful updated solution) to the received images, and solve registration using a 3rd parameter set that also searches a larger solution space. If it is successful, in some examples, that solution is instead applied to the received images, and registration again solved using the original parameter set. In some examples, this ensures the system is not accepting bad matches that may arise from searching the larger solution space, and that the system is confident in the match.

In certain examples, if the failure count rises above the high threshold number (e.g., 7), the system continues to loop through the same criteria but the failure count is effectively set to a fixed range using a modulo operation. For example, the system sets the failure count to 0 if the failure count is equal to the divisor (e.g., n). As an example, the system sets the failure count to mod (n).

According to certain embodiments, at process 555, the system applies the transformation update and/or the updated image transformation (e.g., the transformation solution) to the plurality of images to generate a set of transformed images. In some embodiments, at process 560, the system identifies a plurality of objects using a multiple object tracking model (e.g., the MOT tracker 130, the multiple object tracking process 340, the object tracker process 440) based on the set of transformed images. In certain embodiments, the system applies the MOT model to the set of transformed images to identify the plurality of objects (including but not limited to identifying, assigned tracking IDs, de-duplicating, etc.).

According to some embodiments, at process 565, the system uses one or more image registration scores generated during the image registration process in the multiple object track model (e.g., the MOT tracker 130, the multiple object tracking process 340, the object tracker process 440). As described herein, the system can generate the one or more image registration scores corresponding to the transformation update using the second image registration model, for example. In some embodiments, the system can generate an image registration score corresponding to the transformation solution (e.g., the transformation update, the updated image transformation, etc.). In certain embodiments, the system can generate one or more image registration scores associated with the transformation solution, where at least one image registration score corresponds to a transformation parameter of the transformation solution.

According to certain embodiments, when determining the similarity of two objects in two images (e.g., spatial overlap, similarity, etc.), the system can use at least one of the one or more image registration scores in determining whether two objects are an object of a same tracking ID depends on the image registration score of the image registration process (e.g., image registration score of the transformation solution, etc.). In some examples, a transformation solution corresponding to a high image registration score lends more confidence that spatial overlap or similarity (or lack thereof) is indicative of a duplicate track.

In some embodiments, the system can use the one or more image registration scores to determine whether a de-duplicated track should be unmerged. For example, there may be a time two tracks are merged, but later information indicates they should separate into their individual tracks. In this example, the system does not unmerge if the one or more image registration scores are low (e.g., at least one of the one or more image registration scores is lower than a threshold), as that could potentially introduce a faulty signal.

In certain embodiments, the system can use the one or more image registration scores to determine whether two tracks should be merged. For example. if the object tracker determines that two objects should be merged (including, but not limited to based on spatial overlap), the system does not merge unless (or until) the transformation solution correspond to at least one high image registration score. As an example, making decisions based on a low image registration time step could introduce mismatches that are more difficult to undo. In some examples, waiting for an image registration iteration corresponding to a high image registration score allows the system to more likely to filter out false positive matches, while not closing the door to true positives.

In some embodiments, an MOT (e.g., the MOT 130 in FIG. 1) 130 determines a confidence score (e.g., a confidence score associated with the tracked object, etc.), also referred to as a tracking score, for each tracked object of one or more tracked objects. In certain embodiments, the system can use the one or more tracking scores to enhance image registration. In some embodiments, if two objects are associated with high confidence scores, the system is configured to set the image registration confidence score to be relatively high. In certain embodiments, the system is configured to use one or more objects with relatively high confidence scores to select where to focus for image registration, and/or the like.

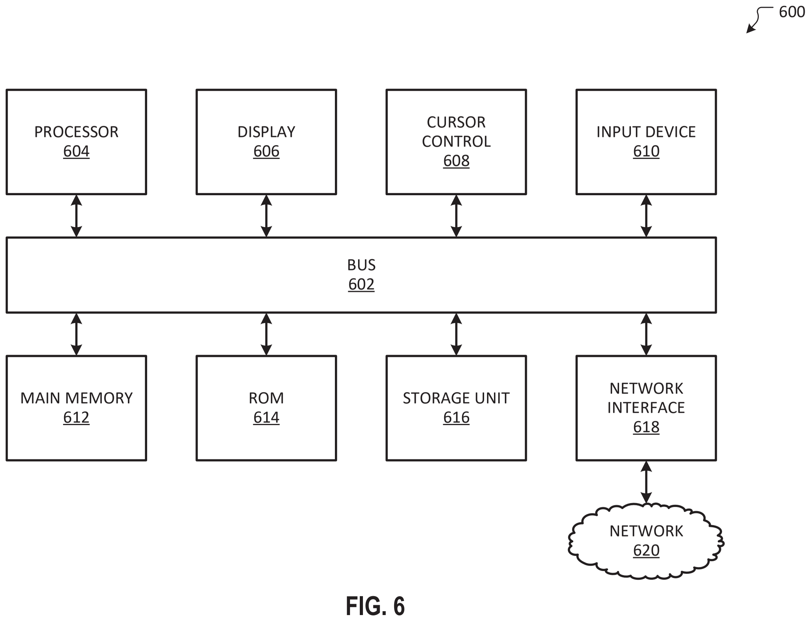

FIG. 6 is a simplified diagram showing a computing system for implementing a system 600 for multiple sensor object tracking in accordance with at least one example set forth in the disclosure. This diagram is merely an example, which should not unduly limit the scope of the claims. One of ordinary skill in the art would recognize many variations, alternatives, and modifications.

The computing system 600 includes a bus 602 or other communication mechanism for communicating information, a processor 604, a display 606, a cursor control component 608, an input device 610, a main memory 612, a read only memory (ROM) 614, a storage unit 616, and a network interface 618. In some embodiments, some or all processes (e.g., steps) of the methods 200, 300 and/or 500 are performed by the computing system 600. In some examples, the bus 602 is coupled to the processor 604, the display 606, the cursor control component 608, the input device 610, the main memory 612, the read only memory (ROM) 614, the storage unit 616, and/or the network interface 618. In certain examples, the network interface is coupled to a network 620. For example, the processor 604 includes one or more general purpose microprocessors. In some examples, the main memory 612 (e.g., random access memory (RAM), cache and/or other dynamic storage devices) is configured to store information and instructions to be executed by the processor 604. In certain examples, the main memory 612 is configured to store temporary variables or other intermediate information during execution of instructions to be executed by processor 604. For example, the instructions, when stored in the storage unit 616 accessible to processor 604, render the computing system 600 into a special-purpose machine that is customized to perform the operations specified in the instructions. In some examples, the ROM 614 is configured to store static information and instructions for the processor 604. In certain examples, the storage unit 616 (e.g., a magnetic disk, optical disk, or flash drive) is configured to store information and instructions.

In some embodiments, the display 606 (e.g., a cathode ray tube (CRT), an LCD display, or a touch screen) is configured to display information to a user of the computing system 600. In some examples, the input device 610 (e.g., alphanumeric and other keys) is configured to communicate information and commands to the processor 604. For example, the cursor control component 608 (e.g., a mouse, a trackball, or cursor direction keys) is configured to communicate additional information and commands (e.g., to control cursor movements on the display 606) to the processor 604.

According to certain embodiments, a method for multiple sensor object tracking is provided. The method includes: receiving one or more first image transformations generated based on a plurality of previous images from a plurality of sensor feeds respectively; receiving a plurality of images from the plurality of sensor feeds; generating a transformation update based on the one or more image transformations and the plurality of images using an image registration model; generating a second image transformation based on the transformation update and the one or more first image transformations; applying the second image transformation to the plurality of images to generate a set of transformed images; and identifying a plurality of objects using a multiple object tracking model based on the set of transformed images, wherein the method is performed using one or more processors. For example, the method is implemented according to at least FIG. 1, FIG. 2, FIG. 3, FIG. 4, and/or FIG. 5.

In some embodiments, the method further comprises: generating an image registration score corresponding to the transformation update based at least in part on the plurality of images using the image registration model. In some embodiments, the method further comprises: determining a scale factor based on the generated image registration score; wherein the generating a second image transformation includes generating the second image transformation by generating the second image transformation based at least in part on the transformation update, the scale factor, and the one or more first image transformations. In certain embodiments, the generating a second image transformation includes generating the second image transformation based at least in part on a multiplication of the transformation update and the scale factor. In some embodiments, the generating a transformation update includes generating the transformation update to be an identity matrix if the image registration score is below a low threshold. In some embodiments, the method further comprises: if the image registration score is higher than a high threshold, storing the transformation update or the second image transformation to a data repository.

In certain embodiments, the image registration model is a first image registration model, wherein the method further comprises: determining whether the transformation update is validated based at least in part on the image registration score; in response that the transformation update is not validated, generating a new image transformation using a second image registration model, the second image registration model being different from the first image registration model; comparing the new image transformation and the second image transformation; and in response that the new image transformation and the second image transformation are similar, validate the transformation update. In some embodiments, the second image registration model includes a second set of transformation parameters; wherein the first image registration model includes a first set of transformation parameters; wherein the second set of transformation parameters are different from the first set of transformation parameters. In certain embodiments, determining whether the transformation update is validated includes determining whether the transformation update is validated based at least in part on the image registration score and a magnitude of the transformation update.

In some embodiments, the transformation update is a first transformation update, wherein the method further comprises: generating one or more second transformation updates based on at least one of the plurality of images having an image parameter different from one of the plurality of images received; and selecting a selected second transformation update from the one or more second transformation updates as the transformation update. In certain embodiments, the generating a transformation update includes: applying the one or more first image transformations to the plurality of images to generate a set of first transformed images; and generating the transformation update based on the one or more previous images and the set of first transformed images. In some embodiments, the image registration model is a first image registration model, wherein the generating a transformation update includes: generating a sensor image transformation based on a previous image and a current image of a same sensor feed using a second image registration model, the current image being one of the plurality of images; applying the sensor image transformation to the current image to generate a sensor-compensated image; applying at least one of the one or more first image transformations to the sensor-compensated image to generate a transformed image; and generating the transformation update based at least in part on the transformed image using the first image registration model.

In certain embodiments, the generating a second image transformation includes: generating one or more image registration scores corresponding to the transformation update using the image registration model, each image registration score being associated with a transformation parameter; and generating a partial transformation update based on the transformation update and the one or more image registration scores. In some embodiments, the method further comprises: generating one or more image registration scores corresponding to the transformation update using the image registration model; wherein the identifying a plurality of objects using a multiple object tracking model includes identifying the plurality of objects using the multiple object tracking model and the one or more image registration scores. In certain embodiments, the receiving a plurality of images includes receiving a set of first images from a first sensor feed of the plurality of sensor feeds and receiving a set of second images from a second sensor feed of the plurality of sensor feeds; wherein the applying the second image transformation includes: applying the second image transformation to the set of second images; aggregating the set of first images and the set of transformed second images to generate a set of aggregated images as the set of transformed images.

According to certain embodiments, a system for multiple sensor object tracking is provided. The system includes one or more processors; and one or more memories storing instructions that, when executed by the one or more processors, causes the system to perform a set of operations. In some embodiments, the set of operations comprising: receiving one or more first image transformations generated based on a plurality of previous images from a plurality of sensor feeds respectively; receiving a plurality of images from the plurality of sensor feeds; generating a transformation update based on the one or more image transformations and the plurality of images using an image registration model; generating a second image transformation based on the transformation update and the one or more first image transformations; applying the second image transformation to the plurality of images to generate a set of transformed images; and identifying a plurality of objects using a multiple object tracking model based on the set of transformed images. For example, the system is implemented according to at least FIG. 1, FIG. 2, FIG. 3, FIG. 4, and/or FIG. 5.

In some embodiments, the set of operations further comprise: generating an image registration score corresponding to the transformation update based at least in part on the plurality of images using the image registration model. In some embodiments, the set of operations further comprise: determining a scale factor based on the generated image registration score; wherein the generating a second image transformation includes generating the second image transformation by generating the second image transformation based at least in part on the transformation update, the scale factor, and the one or more first image transformations. In certain embodiments, the generating a second image transformation includes generating the second image transformation based at least in part on a multiplication of the transformation update and the scale factor. In some embodiments, the generating a transformation update includes generating the transformation update to be an identity matrix if the image registration score is below a low threshold. In some embodiments, the set of operations further comprise: if the image registration score is higher than a high threshold, storing the transformation update or the second image transformation to a data repository.

In certain embodiments, the image registration model is a first image registration model, wherein the set of operations further comprise: determining whether the transformation update is validated based at least in part on the image registration score; in response that the transformation update is not validated, generating a new image transformation using a second image registration model, the second image registration model being different from the first image registration model; comparing the new image transformation and the second image transformation; and in response that the new image transformation and the second image transformation are similar, validate the transformation update. In some embodiments, the second image registration model includes a second set of transformation parameters; wherein the first image registration model includes a first set of transformation parameters; wherein the second set of transformation parameters are different from the first set of transformation parameters. In certain embodiments, determining whether the transformation update is validated includes determining whether the transformation update is validated based at least in part on the image registration score and a magnitude of the transformation update.

In some embodiments, the transformation update is a first transformation update, wherein the set of operations further comprise: generating one or more second transformation updates based on at least one of the plurality of images having an image parameter different from one of the plurality of images received; and selecting a selected second transformation update from the one or more second transformation updates as the transformation update. In certain embodiments, the generating a transformation update includes: applying the one or more first image transformations to the plurality of images to generate a set of first transformed images; and generating the transformation update based on the one or more previous images and the set of first transformed images. In some embodiments, the image registration model is a first image registration model, wherein the generating a transformation update includes: generating a sensor image transformation based on a previous image and a current image of a same sensor feed using a second image registration model, the current image being one of the plurality of images; applying the sensor image transformation to the current image to generate a sensor-compensated image; applying at least one of the one or more first image transformations to the sensor-compensated image to generate a transformed image; and generating the transformation update based at least in part on the transformed image using the first image registration model.

In certain embodiments, the generating a second image transformation includes: generating one or more image registration scores corresponding to the transformation update using the image registration model, each image registration score being associated with a transformation parameter; and generating a partial transformation update based on the transformation update and the one or more image registration scores. In some embodiments, the set of operations further comprise: generating one or more image registration scores corresponding to the transformation update using the image registration model; wherein the identifying a plurality of objects using a multiple object tracking model includes identifying the plurality of objects using the multiple object tracking model and the one or more image registration scores. In certain embodiments, the receiving a plurality of images includes receiving a set of first images from a first sensor feed of the plurality of sensor feeds and receiving a set of second images from a second sensor feed of the plurality of sensor feeds; wherein the applying the second image transformation includes: applying the second image transformation to the set of second images; aggregating the set of first images and the set of transformed second images to generate a set of aggregated images as the set of transformed images.

According to certain embodiments, a non-transitory computer readable storage medium comprising instructions for multiple-sensor object tracking that, when executed by one or more processors, cause the one or more processors to perform a set of operations comprising: receiving one or more first image transformations generated based on a plurality of previous images from a plurality of sensor feeds respectively; receiving a plurality of images from the plurality of sensor feeds; generating a transformation update based on the one or more image transformations and the plurality of images using an image registration model; generating a second image transformation based on the transformation update and the one or more first image transformations; applying the second image transformation to the plurality of images to generate a set of transformed images; and identifying a plurality of objects using a multiple object tracking model based on the set of transformed images. For example, the non-transitory computer readable storage medium is implemented according to at least FIG. 1, FIG. 2, FIG. 3, FIG. 4, and/or FIG. 5.

In some embodiments, the set of operations further comprise: generating an image registration score corresponding to the transformation update based at least in part on the plurality of images using the image registration model. In some embodiments, the set of operations further comprise: determining a scale factor based on the generated image registration score; wherein the generating a second image transformation includes generating the second image transformation by generating the second image transformation based at least in part on the transformation update, the scale factor, and the one or more first image transformations. In certain embodiments, the generating a second image transformation includes generating the second image transformation based at least in part on a multiplication of the transformation update and the scale factor. In some embodiments, the generating a transformation update includes generating the transformation update to be an identity matrix if the image registration score is below a low threshold. In some embodiments, the set of operations further comprise: if the image registration score is higher than a high threshold, storing the transformation update or the second image transformation to a data repository.

In certain embodiments, the image registration model is a first image registration model, wherein the set of operations further comprise: determining whether the transformation update is validated based at least in part on the image registration score; in response that the transformation update is not validated, generating a new image transformation using a second image registration model, the second image registration model being different from the first image registration model; comparing the new image transformation and the second image transformation; and in response that the new image transformation and the second image transformation are similar, validate the transformation update. In some embodiments, the second image registration model includes a second set of transformation parameters; wherein the first image registration model includes a first set of transformation parameters; wherein the second set of transformation parameters are different from the first set of transformation parameters. In certain embodiments, determining whether the transformation update is validated includes determining whether the transformation update is validated based at least in part on the image registration score and a magnitude of the transformation update.

In some embodiments, the transformation update is a first transformation update, wherein the set of operations further comprise: generating one or more second transformation updates based on at least one of the plurality of images having an image parameter different from one of the plurality of images received; and selecting a selected second transformation update from the one or more second transformation updates as the transformation update. In certain embodiments, the generating a transformation update includes: applying the one or more first image transformations to the plurality of images to generate a set of first transformed images; and generating the transformation update based on the one or more previous images and the set of first transformed images. In some embodiments, the image registration model is a first image registration model, wherein the generating a transformation update includes: generating a sensor image transformation based on a previous image and a current image of a same sensor feed using a second image registration model, the current image being one of the plurality of images; applying the sensor image transformation to the current image to generate a sensor-compensated image; applying at least one of the one or more first image transformations to the sensor-compensated image to generate a transformed image; and generating the transformation update based at least in part on the transformed image using the first image registration model.

In certain embodiments, the generating a second image transformation includes: generating one or more image registration scores corresponding to the transformation update using the image registration model, each image registration score being associated with a transformation parameter; and generating a partial transformation update based on the transformation update and the one or more image registration scores. In some embodiments, the set of operations further comprise: generating one or more image registration scores corresponding to the transformation update using the image registration model; wherein the identifying a plurality of objects using a multiple object tracking model includes identifying the plurality of objects using the multiple object tracking model and the one or more image registration scores. In certain embodiments, the receiving a plurality of images includes receiving a set of first images from a first sensor feed of the plurality of sensor feeds and receiving a set of second images from a second sensor feed of the plurality of sensor feeds; wherein the applying the second image transformation includes: applying the second image transformation to the set of second images; aggregating the set of first images and the set of transformed second images to generate a set of aggregated images as the set of transformed images.

For example, some or all components of various embodiments of the present disclosure each are, individually and/or in combination with at least another component, implemented using one or more software components, one or more hardware components, and/or one or more combinations of software and hardware components. In another example, some or all components of various embodiments of the present disclosure each are, individually and/or in combination with at least another component, implemented in one or more circuits, such as one or more analog circuits and/or one or more digital circuits. In yet another example, while the embodiments described above refer to particular features, the scope of the present disclosure also includes embodiments having different combinations of features and embodiments that do not include all of the described features. In yet another example, various embodiments and/or examples of the present disclosure can be combined.

Additionally, the methods and systems described herein may be implemented on many different types of processing devices by program code comprising program instructions that are executable by the device processing subsystem. The software program instructions may include source code, object code, machine code, or any other stored data that is operable to cause a processing system (e.g., one or more components of the processing system) to perform the methods and operations described herein. Other implementations may also be used, however, such as firmware or even appropriately designed hardware configured to perform the methods and systems described herein.

The systems' and methods' data (e.g., associations, mappings, data input, data output, intermediate data results, final data results, etc.) may be stored and implemented in one or more different types of computer-implemented data stores, such as different types of storage devices and programming constructs (e.g., RAM, ROM, EEPROM, Flash memory, flat files, databases, programming data structures, programming variables, IF-THEN (or similar type) statement constructs, application programming interface, etc.). It is noted that data structures describe formats for use in organizing and storing data in databases, programs, memory, or other computer-readable media for use by a computer program.

The systems and methods may be provided on many different types of computer-readable media including computer storage mechanisms (e.g., CD-ROM, diskette, RAM, flash memory, computer's hard drive, DVD, etc.) that contain instructions (e.g., software) for use in execution by a processor to perform the methods' operations and implement the systems described herein. The computer components, software modules, functions, data stores and data structures described herein may be connected directly or indirectly to each other in order to allow the flow of data needed for their operations. It is also noted that a module or processor includes a unit of code that performs a software operation and can be implemented, for example, as a subroutine unit of code, or as a software function unit of code, or as an object (as in an object-oriented paradigm), or as an applet, or in a computer script language, or as another type of computer code. The software components and/or functionality may be located on a single computer or distributed across multiple computers depending upon the situation at hand.

The computing system can include client devices and servers. A client device and server are generally remote from each other and typically interact through a communication network. The relationship of client device and server arises by virtue of computer programs running on the respective computers and having a client device-server relationship to each other.

This specification contains many specifics for particular embodiments. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations, one or more features from a combination can in some cases be removed from the combination, and a combination may, for example, be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Although specific embodiments of the present disclosure have been described, it will be understood by those of skill in the art that there are other embodiments that are equivalent to the described embodiments. Accordingly, it is to be understood that the invention is not to be limited by the specific illustrated embodiments. Various modifications and alterations of the disclosed embodiments will be apparent to those skilled in the art. The embodiments described herein are illustrative examples. The features of one disclosed example can also be applied to all other disclosed examples unless otherwise indicated. It should also be understood that all U.S. patents, patent application publications, and other patent and non-patent documents referred to herein are incorporated by reference, to the extent they do not contradict the foregoing disclosure.

## Claims

1. A method for multiple-sensor object tracking, the method comprising:
receiving (510) one or more first image transformations generated based on a plurality of previous images from a plurality of sensor feeds respectively;
receiving (515) a plurality of images from the plurality of sensor feeds;
generating (530) a transformation update based on the one or more image transformations and the plurality of images using an image registration model;
generating (540) a second image transformation based on the transformation update and the one or more first image transformations;
applying (555) the second image transformation to the plurality of images to generate a set of transformed images; and
identifying (560) a plurality of objects using a multiple object tracking model based on the set of transformed images;
wherein the method is performed using one or more processors.

2. The method of claim 1, further comprising:
generating an image registration score corresponding to the transformation update based at least in part on the plurality of images using the image registration model.

3. The method of claim 2, further comprising:
determining a scale factor based on the generated image registration score;
wherein the generating a second image transformation includes generating the second image transformation by generating the second image transformation based at least in part on the transformation update, the scale factor, and the one or more first image transformations, wherein optionally the generating a second image transformation includes generating the second image transformation based at least in part on a multiplication of the transformation update and the scale factor, wherein optionally the generating a transformation update includes generating the transformation update to be an identity matrix if the image registration score is below a low threshold.

4. The method of claim 3, further comprising:
if the image registration score is higher than a high threshold, storing the transformation update or the second image transformation to a data repository.

5. The method of any of claims 2 to 4, wherein the image registration model is a first image registration model, wherein the method further comprises:
determining whether the transformation update is validated based at least in part on the image registration score;
in response that the transformation update is not validated, generating a new image transformation using a second image registration model, the second image registration model being different from the first image registration model;
comparing the new image transformation and the second image transformation; and
in response that the new image transformation and the second image transformation are similar, validate the transformation update.

6. The method of claim 5, wherein the second image registration model includes a second set of transformation parameters;
wherein the first image registration model includes a first set of transformation parameters;
wherein the second set of transformation parameters are different from the first set of transformation parameters.

7. The method of claim 5 or claim 6, wherein determining whether the transformation update is validated includes determining whether the transformation update is validated based at least in part on the image registration score and a magnitude of the transformation update.

8. The method of any of claims 2 to 7, wherein the transformation update is a first transformation update, wherein the method further comprises:
generating one or more second transformation updates based on at least one of the plurality of images having an image parameter different from one of the plurality of images received; and
selecting a selected second transformation update from the one or more second transformation updates as the transformation update.

9. The method of any preceding claim, wherein the generating a transformation update includes:
applying the one or more first image transformations to the plurality of images to generate a set of first transformed images; and
generating the transformation update based on the one or more previous images and the set of first transformed images.

10. The method of any preceding claim, wherein the image registration model is a first image registration model, wherein the generating a transformation update includes:
generating a sensor image transformation based on a previous image and a current image of a same sensor feed using a second image registration model, the current image being one of the plurality of images;
applying the sensor image transformation to the current image to generate a sensor-compensated image;
applying at least one of the one or more first image transformations to the sensor-compensated image to generate a transformed image; and
generating the transformation update based at least in part on the transformed image using the first image registration model.

11. The method of any preceding claim, wherein the generating a second image transformation includes:
generating one or more image registration scores corresponding to the transformation update using the image registration model, each image registration score being associated with a transformation parameter; and
generating a partial transformation update based on the transformation update and the one or more image registration scores.

12. The method of any preceding claim, further comprising:
generating one or more image registration scores corresponding to the transformation update using the image registration model;
wherein the identifying a plurality of objects using a multiple object tracking model includes identifying the plurality of objects using the multiple object tracking model and the one or more image registration scores.

13. The method of any preceding claim, wherein the receiving a plurality of images includes receiving a set of first images from a first sensor feed of the plurality of sensor feeds and receiving a set of second images from a second sensor feed of the plurality of sensor feeds;
wherein the applying the second image transformation includes:
applying the second image transformation to the set of second images;
aggregating the set of first images and the set of transformed second images to generate a set of aggregated images as the set of transformed images.

14. A system (600) for multiple-sensor object tracking, the system comprising:
one or more processors (604); and
one or more memories (612, 614, 616) storing instructions that, when executed by the one or more processors, causes the system to perform a set of operations in accordance with the method of any preceding claim.

15. A non-transitory computer readable storage medium comprising instructions for multiple-sensor object tracking that, when executed by one or more processors, cause the one or more processors to perform a set of operations in accordance with the method of any of claims 1 to 13.
